# EUROPEAN PATENT APPLICATION

(11) **EP 4 761 216 A2**
(43) Date of publication of application: **17.06.2026**
(21) Application number: 26173185.5
(22) Date of filing: 05.08.2022
(51) Int. Cl.: H04L 65/40

(54) **A CONTROL UNIT FOR CONTROLLING A SENSING/LOCALIZATION TRANSCEIVER FOR A WIRELESS DEVICE, A WIRELESS DEVICE, A METHOD, AND A COMPUTER PROGRAM PRODUCT**

(30) Priority: 06.08.2021 SE 2130216
(62) Divisional of application: 22853603.3
(71) Applicant: Beammwave AB, 223 63 Lund (SE)
(72) Inventor: Lindoff, Bengt, 237 35 Bjärred (SE)
(74) Representative: PatIO AB

(57) **Abstract**

A control unit (50) for a wireless device (1) the wireless device comprising a communication transceiver unit (51a) and a sensing/localization transceiver unit (51b) is disclosed. The control unit is configured to control the communication transceiver unit to communicate with a network, NW, node (2) and configured to control the sensing/localization transceiver unit to sense and/or localize an object. The control unit is further configured to control the communication transceiver unit to transmit capability information to the NW node, wherein the capability information comprises information about a capability of the sensing/localization transceiver unit to sense and/or localize an object. A first portion of the capability information is transmitted on a radio resource control (RRC) layer. Corresponding wireless device, method and computer program product are also disclosed.

## Description

### TECHNICAL FIELD

The present disclosure relates generally to the field of wireless devices. More particularly, it relates to a control unit for a wireless device and to transmission of capability information.

### BACKGROUND

US 9503134 B2 discloses methods and apparatuses for adapting transmitter configuration for efficient concurrent transmission and radar detection through adaptive self-interference cancellation.

However, resource allocation in the above-mentioned methods and apparatuses may not be efficient enough. Thus, there may be a need for more efficient resource allocation, such as more efficient resource allocation for sensing and/or localization of object(s).

US 2021/211973 A1 discloses a method/apparatus for transmit parameter indication in support of WLAN sensing. However, in the method disclosed in US 2021/211973 A1 the efficiency in utilizing radio resources may not always be high enough.

### SUMMARY

It is an object of some embodiments to solve, mitigate, alleviate, or eliminate at least some of the above or other problems or disadvantages.

According to a first aspect, this is achieved by a control unit for a wireless device. The wireless device comprises a communication transceiver unit and a sensing/localization transceiver unit. The control unit is configured to control the communication transceiver unit to communicate with a network, NW, node and configured to control the sensing/localization transceiver unit to sense and/or localize an object. The control unit is further configured to control the communication transceiver unit to transmit capability information to the NW node, wherein the capability information comprises information about a capability of the sensing/localization transceiver unit to sense and/or localize an object. The transmission of capability information comprising information about a capability of the sensing/localization transceiver unit to sense and/or localize an object enables more efficient resource allocation for sensing and/or localization of object(s).

In some embodiments, a first portion or all of the capability information is transmitted on a radio resource control (RRC) layer. By transmitting a first portion of the capability information on/over/via the RRC layer, efficiency in utilizing radio resources is improved, e.g., since information can be transmitted in longer messages, and utilizing non-prioritized time frequency resources.

In some embodiments, the capability information comprises sensing and location capability indexes according to a pre-defined rule.

In some embodiments, a first portion of the capability information is transmitted on the RRC layer, and a second portion of the capability information is transmitted on one or more of: a media access (MAC) layer; a physical (PHY) layer; and an application layer.

In some embodiments, the control unit is further configured to associate the wireless device with the NW node for establishing a wireless communication channel, preferably through a connection setup. In some
embodiments, the control unit is further configured to establish a connection to a remote server, connected to the NW node, the remote server controlling the sensing and/or localization of the object.

In some embodiments, the controlling the communication transceiver unit to transmit capability information to the NW node comprises causing the communication transceiver unit to transmit, via the NW node, a control message comprising the capability information to the remote server over the established wireless communication channel.

In some embodiments, the capability information comprises one or more of: backscattering capability of the sensing/localization transceiver unit, and radar capability of the sensing/localization transceiver unit.

In some embodiments, the capability information comprises one or more of: frequency ranges which can be utilized for sensing and/or localization of the object, simultaneous sensing and communication capability of the sensing/localization transceiver unit; spatial resolution of sensing and localization capabilities, such as directions; sensing and/or localization operation power limits; time duration and periodicity of sensing and/or localization operation capabilities; and sensing and localization measurement reporting capabilities.

In some embodiments, the communication transceiver unit is utilized as the sensing/localization transceiver unit. By utilizing the communication transceiver unit as the sensing/localization transceiver unit, complexity of the system is reduced.

In some embodiments, the communication with the NW node is performed in a first frequency range and the sensing and/or localization of the object is performed in a second frequency range, the second frequency range at least partially overlapping the first frequency range.

According to a second aspect, there is provided a wireless device comprising a communication transceiver unit, a sensing/localization transceiver unit, and the control unit of the first aspect or of any of the abovementioned embodiments.

According to a third aspect, there is provided a method of a control unit for a wireless device. The wireless device comprises a communication transceiver unit and a sensing/localization transceiver unit. The method may comprise associating the wireless device with a NW node for establishing a wireless communication channel. The establishing a wireless communication channel is preferably performed through a connection setup. The method comprises controlling the communication transceiver unit to communicate with the network, NW, node. The method may comprise establishing a connection to a remote server, connected to the NW node, the remote server controlling the sensing and/or localization of the object. The method further comprises controlling the sensing/localization transceiver unit to sense a surrounding object. Furthermore, the method comprises controlling the communication transceiver to transmit capability information to the NW node. The capability information comprises information about a capability of the sensing/localization transceiver unit to sense a surrounding object. The controlling to transmit capability information may comprise causing the communication transceiver unit to transmit, via the NW node, a control message comprising the capability information to the remote server over the established wireless communication channel. In some embodiments, a first portion or all of the capability information is transmitted to the NW node on a radio resource control (RRC) layer.

According to a fourth aspect, there is provided a computer program product comprising a non-transitory computer readable medium, having thereon a computer program comprising program instructions, the computer program being loadable into a data processing unit and configured to cause execution of the method of the third aspect when the computer program is run by the data processing unit.

In some embodiments, any of the above aspects may additionally have features or embodiments identical or corresponding to any of the features or embodiments described above for any of the other aspects.

An advantage of some of the embodiments is that a more efficient resource allocation for sensing is enabled/achieved. Another advantage of some of the embodiments is that the server knows the wireless device capabilities and therefore can allocate correct resources (and improve efficiency) for sensing/localization of objects or an environment around the wireless device, so that the operation can be performed in an efficient manner. Yet another advantage of some of the embodiments is that the remote server knows which frequency ranges can be sensed by the wireless device and therefore can allocate resources giving improved/maximal information about the sensing operation, thereby improving the sensing operation (e.g., increase precision or efficiency of the operation). A further advantage of some of the embodiments is that the remote server knows whether a back scatter operation can be achieved with a single wireless device (giving less complex back scatter scheduling requirements), or with two wireless devices (requiring multiple wireless device coordination for successful backscattering). Thus, an improved overall efficiency is achieved. Yet a further advantage of some of the embodiments is that the remote server knows which type of radar and location, velocity accuracy of objects and type of sensing that can be achieved utilizing the wireless device, thus improving/maximizing the information about a sensing/localization operation thereby improving the sensing operation (e.g., increasing precision or efficiency of the operation). Another advantage of some of the embodiments is that more efficient resource allocation for communication and/or sensing can be achieved. Yet an advantage of some of the embodiments is that spatial sensing information is known, and each sensing operation can be optimized in respect of efficiency and/or resource allocation. Yet another advantage of some of the embodiments is that the server can estimate the coverage of the sensing operation, which may be utilized for improved/optimal sensor operation resource allocation. A further advantage of some of the embodiments is that the spectral sensing capacity of the entire communication and sensing system may be improved/optimized. Yet a further advantage of some of the embodiments is that more efficient transmission may be achieved. Another advantage of some of the embodiments is that efficiency in utilizing radio resources is improved, e.g., since information can be transmitted in longer messages, and utilizing non-prioritized time frequency resources. Yet another advantage of some of the embodiments is that signaling in the backhaul between RAN and/or Core Network and/or the external remote server is reduced.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is a schematic drawing illustrating a wireless communication system;
Figure 2 is a schematic drawing illustrating a radar system;
Figure 3A is a schematic drawing illustrating a bistatic backscatter system;
Figure 3B is a schematic drawing illustrating a monostatic backscatter system;
Figure 3C is a schematic drawing illustrating an example backscatter device;
Figure 4 is a schematic drawing illustrating frequency ranges used for radar operation and communication;
Figure 5 is a schematic drawing illustrating an example wireless communication system;
Figure 6 is a schematic drawing illustrating another example wireless communication system;
Figure 7 is a schematic drawing illustrating Frequency ranges for Radar and Communication;
Figure 8 is a schematic drawing illustrating Frequency ranges for Backscatter and Communication;
Figure 9 is a flow chart illustrating a method for a wireless device;
Figure 10 is a flow chart illustrating a method for a wireless device;
Figure 11 is a flow chart illustrating a method for a network node;
Figure 12 is a flow chart illustrating a method for a network node;
Figure 13 is a flow chart illustrating a method for a wireless device;
Figure 14 is a flow chart illustrating a method for a wireless device;
Figure 15 is a flow chart illustrating a method for a wireless device;
Figure 16 is a flow chart illustrating a method for a wireless device;
Figure 17 is a schematic drawing illustrating a wireless device;
Figure 18 is a schematic drawing illustrating a network node;
Figure 19 is a schematic drawing illustrating a computer program product; and
Figure 20 is a flow chart illustrating a method for a wireless device.

### DETAILED DESCRIPTION

It should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product, e.g., an apparatus. The physical product may comprise one or more parts, such as controlling circuitry in the form of one or more controllers, one or more processors, or the like.

Embodiments of the present disclosure will be described and exemplified more fully hereinafter with reference to the accompanying drawings. The solutions disclosed herein can, however, be realized in many different forms and should not be construed as being limited to the embodiments set forth herein.

Below reference is made to a control unit. Some examples of such a control unit are processor, digital processor, processing unit, central processing unit, CPU, microcontroller, and microprocessor. Furthermore, below reference is made to a transceiver unit. A transceiver unit is a unit comprising at least one radio transmitter and/or at least one radio receiver.

Below reference is made to a wireless device. A wireless device may be any of a Smartphone, a cell phone, User Equipment, Mobile Terminal, IoT device such as AR/VR/XR device, a laptop, a tablet, a wireless station, a relay or a repeater device, or a large intelligent surface.

Below reference is made to a network (NW) node. A NW node may be any of a Radio Base Station, Node B, eNodeB, gNodeB, a remote radio unit, a repeater or relay node or access point, large intelligent surface, or any future version of such kind of nodes.

Below reference is made to a remote server. A remote server may be located at a NW node. Alternatively, a remote server may be located remote from a NW node, such as being connected to a NW node via an Internet connection. The remote server may be associated with RAN, such as being part of the RAN, the core network, such as being part of the core network, or Internet, such as being connected via the Internet.

Below reference is made to a surrounding object. A surrounding object may be an object in the surrounding radio environment around the wireless device or simply an object in the vicinity of the wireless device.

Below reference is made to an object identifier. An object identifier may be an identifier mechanism for naming any object, concept, or "thing" with a globally unambiguous persistent name. Thus, an object being identified as a ball, cat, dog, stone, or a traffic sign of a specific type may be provided with a suitable name, e.g., an object identified as a ball may be assigned the object identifier "ball" and an object identified as a cat may be assigned the object identifier "cat" etc.

Due to the enormous success of the wireless communication standards such as 3G, 4G, 5G, Wi-Fi and Bluetooth the number of wirelessly connected devices has increased significantly during the latest years. Therefore, the frequency spectrum is becoming increasingly congested with the rapid growth of the wireless communication needs.

In further communication standards there will be a need for supporting extreme low or no-power device communication, with use cases such as sensors sensing temperatures, humidity, etc., as well as asset tracking of objects/items. A suitable communication technology for this kind of application relies on backscatter or radar. In case of backscatter, the sensor has a passive transceiver, for instance an antenna, which impedance can be modulated. Then if a radio wave is transmitted from a device towards the antenna, the reflected radio waves will be dependent on the impedance modulation and hence information from the sensor can be detected based on the received reflections.

At the same time radar has been developed for decades since its birth in the first half of the 20th century. Modern radar systems are deployed worldwide, with a variety of applications including traffic control, geophysical monitoring, weather observations as well as surveillance for defense and security. Radar application has recently been incorporated into vehicles and wireless devices and sensing of the environment as well and positioning/localization of items/objects is foreseen to be important future radar applications. The sensing and localization applications are especially applicable to the higher frequencies such as the mmWave band where centimeter or even millimeter precision in localization can be achieved.

However, with the emerging need of large spectrum allocation to the diverse wireless communication use cases, from mobile broadband requiring Gbit-rates to low or no-power device communication such as backscatter communication as well as the increasing use of radar for localization and sensing, there may be a need for communication and radar/backscatter to utilize the same radio spectrum. Radar is similar to backscatter communication, where the received reflection from the backscatter device contains information, while radar reflections contain information in the form of an "image". Therefore, communication and radar/backscatter may converge to operate in the same radio spectrum in forthcoming wireless communication standards.

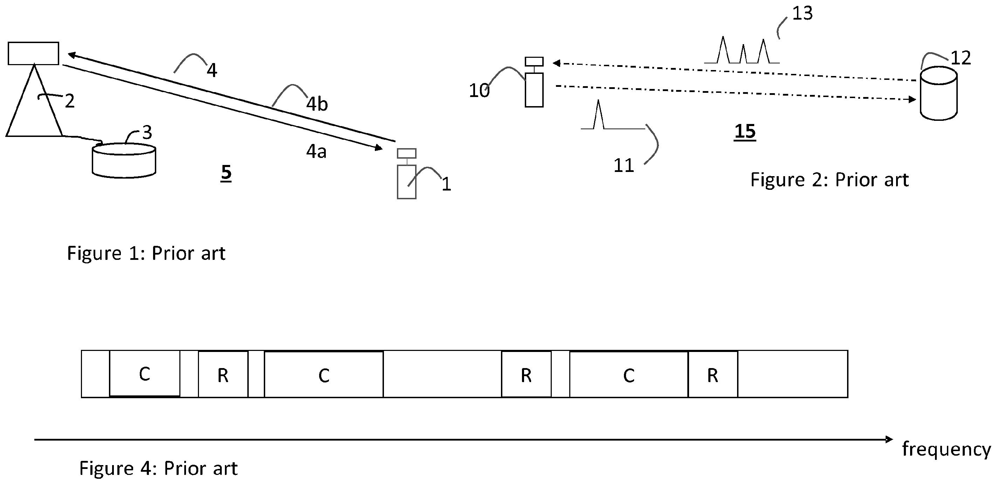

Figure 1 illustrates a wireless communication system 5 according to prior art, such as a 2G, 3G, 4G, 5G cellular system or a Wi-Fi or Wi Gig system. The system 5 comprises a Wireless device (WD) 1, a network node (NW node) 2 and a server 3 connected to the NW node 2. The WD 1 is in communication with the NW node 2 over a radio channel. The radio channel frequencies may be within in the range from 0.4 GHz to 300 GHz. Communication here means that data and control messages are transferred over a communication channel 4 between the WD 1 and NW node 2. The communication channel comprises a downlink channel 4a if data and control messages are sent from the NW node 2 to the wireless device 1 and comprises an uplink channel 4b if data and control messages are sent from the WD 1 to the NW node 2. The data and control messages are terminated in the WD 1 and/or in a server 3 on the network side. The server 3 may be physically and/or logically associated with the network or may be physically and logically separated from the NW node 2 and hence can be a server on the Internet, which is connected via wire or wirelessly to the NW node 2.

Figure 2 illustrates a radar system 15 according to prior art. A radar unit 10 transmits radar signals 11 that may be short radar pulses (as shown in figure), or specific radar signals, such as chirp signals. The radar signals 11 are transmitted on certain radio frequencies from 100 MHz to 300 GHz. The radar pulse hits an object 12, and the radar signal 11 is reflected back to the radar unit 10. The reflection may comprise one or more reflected pulses 13, where the pulse train (of one or more reflected pulses) describes the object 12 that reflects the radar signal 11. The radar unit 10 then receives the reflected radar pulses 13, and from the transmitted radar pulses/signal 11 and the received reflected radar pulses 13, a processor (not shown) in the radar unit 11 is able to sense and localize the object 12. Sense here may mean to quantify the size or a signature of the object 12, and localization may mean to determine the object's position or direction. Additionally, or alternatively a velocity of movement of the object 12 may be determined, e.g., by measuring the time delay between the transmitted radar signals 11 and the received reflected radar pulses/signal 13. Hence radar operation can be seen as means to sense and/or localize objects 12 surrounding the radar unit.

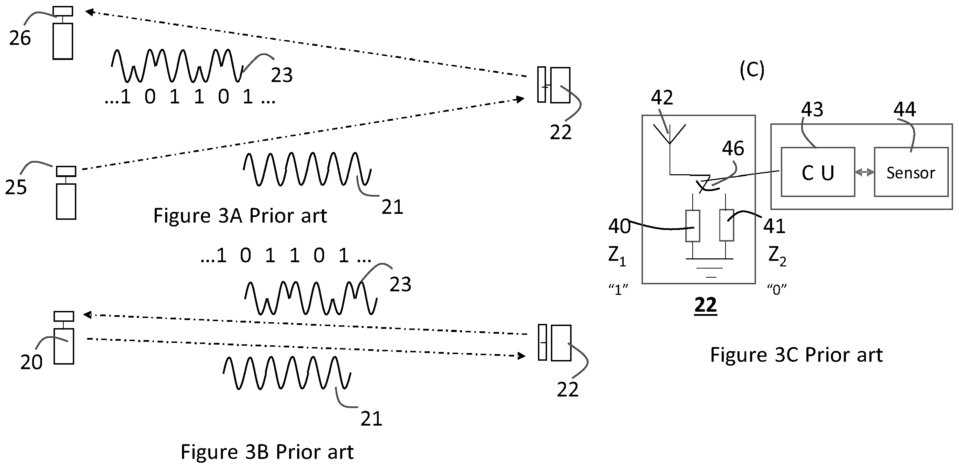

Figure 3a shows a bistatic backscatter system according to prior art. In this case a first (wireless) device 25 is transmitting the carrier signal 21 and a second (wireless) device 26 is receiving and decoding the reflected signal 23. The operation of the backscatter device 22 is the same as in the monostatic case (described below). The first device 25 or the second device 26 may be replaced by a NW node (not shown).

Figure 3b shows a monostatic backscatter system according to prior art. A (wireless) device 20 transmits a carrier wave/signal 21 (or other periodic signal) at a first radio frequency. The first radio frequency may be from 100 MHz to 300 GHz. The radio carrier signal 21 hits the antenna on a backscatter device 22, having modulated an information signal on the antenna impedance, as described below. The reflected (radio) signal 23 is modulated and received by the device 20, e.g., by a backscatter receiver of the device 20. Thus, a processor, comprised by the device 20 or external to the device 20 can extract the information from the backscatter device 22. The information from the backscatter device 22 may comprise an identity of the back scatter device 22 and/or information about a sensor value from a sensor associated with the back scatter device 22.

Figure 3c shows an example backscatter device 22. The device 22 comprises an antenna 42, impedance matching components 40,41, a control unit 43, controlling a switch 46, and optionally a sensor 44. The sensor measures an entity/value, such as a temperature, a light intensity, or a humidity. The control unit 43 maps the measurement value to digital information, and together with the back scatter device identity (also represented by a digital bit pattern) modulates an antenna impedance according to the bit pattern. A "one" represents setting the antenna switch connected to the first impedance matching component (Z1) 40, giving effect of that the reflected signal is phase shifted with a first phase shift relative the incoming radio signal. For generating a "zero" the switch is set to the second impedance matching component (Z2) 41 giving effect of that the reflected signal is phase shifted with a second phase shift relative the incoming radio signal. By modulating the information on the signal as different antenna impedances, the reflection comprises information that can be decoded by the device 22. Since the back scatter device 22 does not have an active transmitter, but relies on modulating an incoming radio signal's reflection, the back scatter device 22 can be made extremely power efficient and communication using back scattering can with today's technology reach 10ths to 100rds of meters and open up for various new use cases of Internet of Thing communication.

The back scatter system can be seen as a system that can perform sensing (in this case information from the back scatter device 22) and also localization/identification of the back scatter device 22 can be made by determining identity of the back scatter device 22, e.g., as the back scatter identity can be tagged to the message modulated on the antenna (asset tracking). Hence, also a back scatter system can be seen as means to sense and/or localize objects surrounding the device.

Figure 4 illustrates frequency ranges used for radar operation and communication according to prior art. Here some parts of the radio frequency ranges are allocated to communication (C) (as described in figure 1) and other radio frequency ranges are allocated to radar operation (R) (as described in figure 2). As can be seen the frequency ranges used for radar and communication may not overlap in current communication and radar systems.

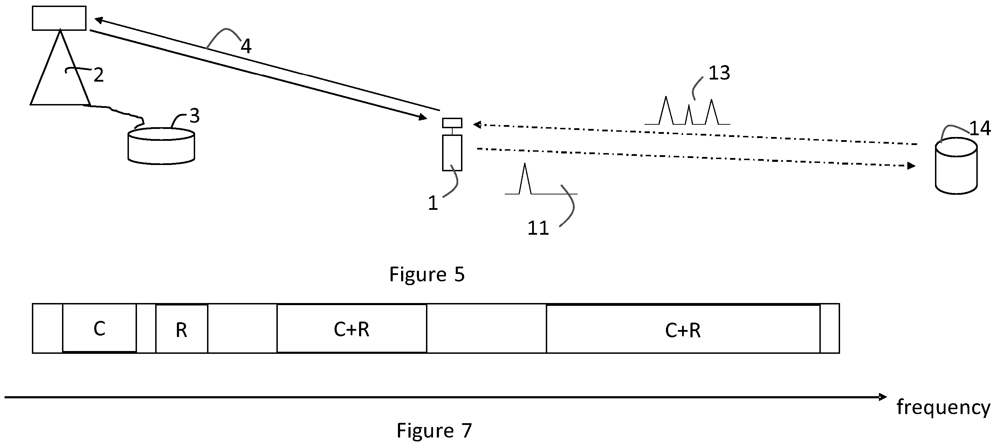

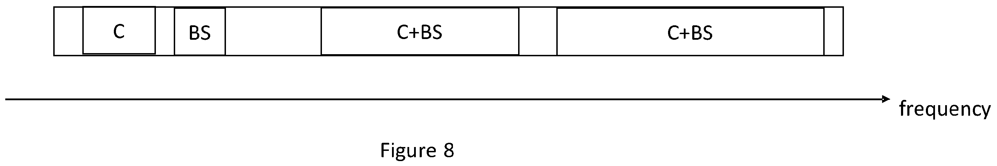

In future wireless communication systems, such as evolutions of the 5G system (Beyond 5G) or 6G, or xG, x>6, systems, communication, and sensing and/or localization operation of the surrounding may converge to use the same radio spectrum, i.e., the same frequency range(s). This is especially true for the higher radio frequencies, e.g., the millimeterwave (mmWave, mmW) ranges, such as 24-300 GHz, or maybe even high radio frequencies. Hence, it is expected that communication (C) and radar (R) operation or communication (C) and backscatter (BS) operation may share the same frequency range in some part of the radio spectrum, as exemplified in figures 7 and 8. It is also possible that communication, radar, and backscatter operation may operate in the same frequency ranges of the radio spectrum (not shown in the figures).

The shared frequency ranges may be using licensed or unlicensed radio frequency bands. Licensed frequency band may here mean that it is owned by an operator at the special location and surrounding of the devices and network nodes performing communication, and sensing and/or localization operation. Unlicensed band may here mean that the radio frequency band is not owned by an operator, and hence free to use to all wireless devices constrained to some operation rules such as for instance listen before talk (LBF), meaning the wireless device need to listen on the radio channel and determine if it is free to use prior to performing communication, radar, or back scatter operation. Other restrictions such as power limit constraints may be applicable as well.

In case the sensing and/or localization operation, such as radar or backscatter operation, is operating in a licensed spectrum the wireless network infrastructure may be in control of the sensing and/or localization operation. In some scenarios a server on the Internet may have control of sensing and/or localization operation of surrounding object(s), e.g., in case of sensing and/or localization in a licensed band.

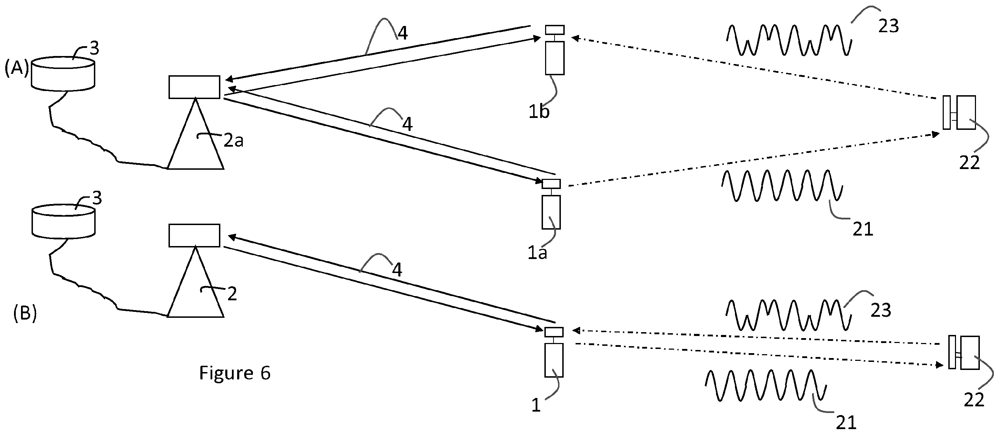

Figure 5 shows one such example, where the network infrastructure, comprising server(s) 3 and network node(s) 2, is in control not only of the wireless device communication operation 4 with the network node 2, but also the radar operations 11, 13 performed by the wireless device 1. Figure 6 shows another example, where the network infrastructure, comprising servers 3, 3a and network node(s) 2, 2a, is in control of communication operation(s) 4 with the wireless device 1 in the monostatic backscattering case (B), and wireless devices 1a, 1b in the bistatic backscatter case as well as the back scatter operations 21, 23 performed by the wireless device(s) 1, 1a, 1b. The control here may mean that a server 3, 3a and/or a corresponding network node 2, 2a control for instance the radio resources, and radar or backscatter operation parameters used for sensing and/or localization of surrounding object(s).

The communication operation between the network node 2, 2a and the wireless device 1, 1a, 1b, may be performed using a first frequency range, while the sensing and/or localization operation performed by the wireless device 1, 1a, 1b may be performed using a second frequency range. The first and second frequency range may be a continuous frequency range, or a non-continuous frequency range. The first and second frequency range may overlap in some embodiments, while in other embodiments the first and second frequency ranges used may not overlap. The network infrastructure (or a server on the Internet) may still have control of the frequency range used for sensing and/or localization of surrounding object(s), even if the first and second frequency ranges do not overlap, for instance due to that the frequency band used for sensing is a licensed frequency band.

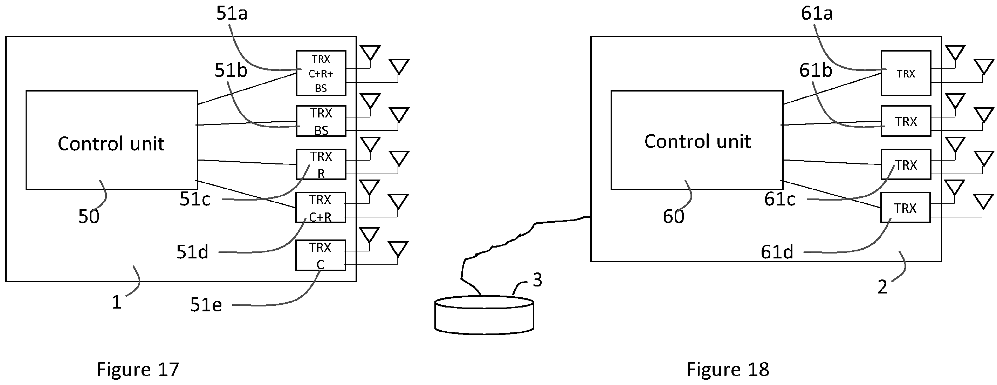

Figure 17 is a schematic drawing illustrating a wireless device 1 according to some embodiments. The wireless device 1 comprises a control unit 50, such as a processor, e.g., a digital processor, a processing unit, a CPU, a microcontroller, and one or more sets of radio transceiver units 51a, 51b, 51c, 51d, 51e. Each transceiver unit 51a, 51b, 51c, 51d, 51e comprises one or more radio transmitters, one or more radio receivers and/or one or more antennas. In some embodiments, the transceiver units 51a, 51b, 51c, 51d, 51e have the functionality of well-known radio transceivers, such as analog and digital filtering, analog to digital converters, digital to analog converters, mixers, local oscillators, phase locked loops, amplifiers, such as amplifiers on the receiver side, Low noise amplifiers (LNA), and Voltage Controlled Gain Amplifiers (VGA), and power amplifiers on the transmitter side. The one or more antennas are arranged in an antenna array, which may be integrated into a transceiver unit 51a, 51b, 51c, 51d, 51e. Additionally or alternatively external antennas are connected to the transceiver units 51a, 51b, 51c, 51d, 51e. Furthermore, the transceiver units 51a, 51b, 51c, 51d, 51e and/or the antennas may also comprise impedance matching networks as well as duplexers/diplexers/triplexers, and optionally analog phase shifters and/or radio frontend analog switches. In some embodiments, the transceiver units 51a, 51b, 51c, 51d, 51e are capable of transmitting and/or receiving communication signals (C), radar signals (R), back scatter signals (BS) and/or any combination of these signals. In one embodiment, the transceiver unit 51a is capable of both performing a communication operation (as indicated by C) and sensing and/or localization of one or more surrounding objects either by radar operation (as indicated by R) or by backscatter operation (as indicated by BS). In one embodiment, the transceiver unit 51b can only perform back scatter operation (as indicated by BS), while the transceiver unit 51c can only perform radar operation (as indicated by R), while the transceiver unit 51d can perform radar and communication operation (as indicated by C+R) and the transceiver unit 51e can only perform communication operation (as indicated by C).

The respective transceiver units 51a, 51b, 51c, 51d, 51e are further capable of transmitting and receiving radio signals in a set of frequency ranges. In some embodiments, some transceiver units 51a, 51b, 51c are only capable of transmitting in a first subset of the frequency ranges while other transceiver units 51d, 51e are capable of operating in a second subset of frequency ranges that may or may not overlap the first subset. In some embodiments, the frequency range capabilities for each transceiver unit 51a, 51b, 51c, 51d, 51e overlap with the frequency ranges for communication, radar and/or back scatter signal transmission and reception. In other embodiments, the frequency range capabilities for each transceiver unit 51a, 51b, 51c, 51d, 51e do not overlap with the frequency ranges for communication, radar and/or back scatter signal transmission and reception.

The control unit 50, e.g., a digital processor, comprises functions to control the transceiver units 51a, 51b, 51c, 51d, 51e, in terms of time instances and/or frequency ranges to transmit or receive communication and/or radar/back scatter signals. The control unit 50 may also control the communication with NW nodes and other wireless device over the communication channel(s). In some embodiments, the control unit 50 control the operation of transmitting wireless device capabilities to sense and/or localize one or more objects surrounding the wireless device 1.

In some embodiments, the control unit 50 controls the transmission of measurement reports (e.g., to a NW node), the reports being associated with results of the performed sensing and/or localization operation. In some embodiments, the control unit 50 also control the baseband signals to be transmitted, i.e., upconverted to radio signals and then transmitted by the transceiver units 51a-e, as well as detection and decoding of received baseband signals, i.e., down converted from received radio signals in the transceiver units 51a-e. The signals to be transmitted/received could be communication, radar and/or back scatter signals.

It should be noted that the partitioning with digital processor/control unit in one unit and the transceiver units as separate units or integrated circuit (IC) chips is just an example partition. Other examples may be that the entire digital processor and transceiver units may be comprised on a single IC chip. The antenna arrays may be integrated as well or may be external antennas connected to the IC chip. In yet another example the digital processor and transceiver units are on separate IC chips but in the same encapsulation. In yet another example, the digital processor may be integrated on the same chip or encapsulation with a first subset of the transceiver units (operating for instance on a first frequency range), while a second subset of transceiver units may be separate IC chips or in other separate encapsulations.

As further wireless device examples, in one embodiment, the wireless device 1 may only have one transceiver capable of performing both communication, and localization and/or sensing operation, in both first and second frequency ranges. In another embodiment, the wireless device 1 may have a few (1, 2, 3 or 4) transceivers capable of performing communication and back scatter operation in frequency ranges below 10 GHz, and a number of transceivers (4-16) capable of performing communication and radar or backscatter operations on frequency ranges from 10 to 80 GHz. In yet another embodiment, the wireless device 1 may have wireless device capabilities as above, and further have 16-1000nds of transceiver units capable of performing communication and/or radar and/or back scatter operations on radio frequencies above 24 GHz or preferably above 80 GHz. An example of such a device with an extremely large amount of transceiver units and hence antenna elements may be a large intelligent surface. A large intelligent surface (also called RadioWeaves) is a surface comprising of 100rds-1000nds of transmitter units, or antenna elements capable of beamforming the radio signal in a very precise manner, and can hence be a very suitable device for sensing and/or localization operations.

Figure 18 is a schematic drawing illustrating a network (NW) node according to one embodiment of the invention. The NW node 2 comprises a network node control unit 60 (referred to below as control unit 60) controlling one or more transceiver units 61, 61a, 61b, 61c, 61d, utilized for transmitting and/or receiving sensing and/or localization capability, configuration and/or measurement information over an established communication channel to the wireless device 1. Sensing and/or localization operation may be radar operation or a back scatter operation. In some embodiments, the NW node 2 is also connected to a remote server 3, which controls the sensing and/or localization operations for the wireless device 1.

### Wireless device sensing capability signaling (1)

As exemplified above there may be a plurality of wireless devices, each with a different capability to perform communication operation with a network node, and each with a different capability to perform sensing and/or localization of the surroundings using for instance either radar or back scatter functionality. Therefore, there is a need for a wireless device to signal sensing and/or localization operation capabilities to a remote server controlling the sensing operations in the radio frequency spectrum.

As illustrated by figure 17 in some embodiments a control unit 50 is provided. The control unit 50 may be comprised in a wireless device 1 (as shown in figure 17). Alternatively, the control unit 50 is external to the wireless device (not shown). The control unit 50 is for a wireless device 1. The wireless device 1 comprises a communication transceiver unit 51a and a sensing/localization transceiver unit 51a, 51b, 51c. The control unit 50 is configured to control the communication transceiver unit 51a to communicate with a network, NW, node 2. To this end, the control unit 50 may be associated with (e.g., operatively connectable, or connected to) a communication transceiver control unit (e.g., communication transceiver control circuitry or communication transceiver control module).

Furthermore, the control unit 50 is configured to control the sensing/localization transceiver unit 51a, 51b, 51c to sense and/or localize an object, such as an object in the surroundings of the wireless device 1. To this end, the control unit 50 may be associated with (e.g., operatively connectable, or connected to) a sensing/localization transceiver control unit (e.g., sensing/localization transceiver control circuitry or sensing/localization transceiver control module).

The control unit 50 is further configured to control the communication transceiver unit 51a to transmit capability information to the NW node 2. To this end, the control unit 50 may be associated with (e.g., operatively connectable, or connected to) a capability information control unit (e.g., capability information control circuitry or capability information control module).

The capability information comprises information about a capability of the sensing/localization transceiver unit(s) 51a, 51b, 51c to sense and/or localize an object. By transmitting capability information comprising information about a capability of the sensing/localization transceiver unit to sense and/or localize an object, a more efficient resource allocation for sensing is achieved/enabled. In some embodiments, the capability to sense and/or localize an object is a capability to sense and/or localize an object utilizing the principle of backscatter, such as by utilizing radar, monostatic back scattering or bistatic back scattering.

Moreover, in some embodiments, a first portion of the capability information is transmitted on a radio resource control, RRC, layer. In some embodiments, the first portion of the capability information comprises all the capability information. By transmitting a first portion of the capability information on/over/via the RRC layer, efficiency in utilizing radio resources is improved, e.g., since information can be transmitted in longer messages, and utilizing non-prioritized time frequency resources.

In some embodiments, the control unit 50 is further configured to associate the wireless device 1 with the NW node 2 for establishing a wireless communication channel, preferably through a connection setup. To this end, the control unit 50 may be associated with (e.g., operatively connectable, or connected to) a NW node communication establishing unit (e.g., NW node communication establishing circuitry or NW node communication establishing module). Furthermore, in some embodiments, the control unit 50 is further configured to establish a connection to a remote server 3, connected to the NW node 2. To this end, the control unit 50 may be associated with (e.g., operatively connectable, or connected to) a remote server communication establishing unit (e.g., remote server communication establishing circuitry or remote server communication establishing module). In some embodiments, the remote server 3 controls the sensing and/or localization of the object, e.g., the sensing and localization capability control may be in/at the remote server 3. Alternatively, the sensing and localization capability control may be in/at the NW node 2. In some embodiments, controlling the communication transceiver unit 51a to transmit capability information to the NW node 2 comprises causing the communication transceiver unit 51a to transmit, via the NW node 2, a control message comprising the capability information to the remote server 3 over the established wireless communication channel.

In some embodiments, the capability information comprises one or more of: backscattering capability of the sensing/localization transceiver unit 51b, such as whether the sensing/localization transceiver unit 51b has backscattering capability (e.g., indicated as either "has backscattering capability" or as "does not have backscattering capability"); and radar capability of the sensing/localization transceiver unit 51b, such as whether the sensing/localization transceiver unit 51b has radar capability (e.g., indicated as either "has radar capability" or as "does not have radar capability"). Furthermore, in some embodiments, the capability information comprises one or more of: frequency ranges which can be utilized for sensing and/or localization of the object; simultaneous sensing and communication capability of the sensing/localization transceiver unit 51b, such as whether the sensing/localization transceiver unit 51b has simultaneous sensing and communication capability (e.g., indicated as either "has simultaneous sensing and communication capability" or as "does not have simultaneous sensing and communication capability"); spatial resolution of sensing and localization capabilities, such as directions that can be utilized; sensing and/or localization operation power limits; time duration and periodicity of sensing and/or localization operation capabilities; and sensing and localization measurement reporting capabilities, such as the form/format the measurement is reported in. In some embodiments, the capability information comprises one or more sensing and localization capability indices. The indices may be constructed according to a pre-defined rule, such as according to a communication standard or a sensing and/or a localization standard. The index may for instance be a short code which is associated with one or more of a certain frequency range which can be utilized for sensing and/or localization of an object, a certain backscattering capability of the sensing/localization transceiver unit 51b, a certain radar capability of the sensing/localization transceiver unit 51b, if simultaneous sensing and communication capability of the sensing/localization transceiver unit 51b is possible, a certain spatial resolution of sensing and localization capabilities, a certain sensing and/or localization operation power limit(s); a certain time duration and periodicity of sensing and/or localization operation capabilities and a certain sensing and localization measurement reporting capability. In some embodiments, the control message or the capability information is transmitted on at least one of a radio resource control, RRC, layer; a media access, MAC, layer; a physical, PHY, layer; and an application layer. In some embodiments, a first portion of the capability information is transmitted on the RRC layer, and a second portion of the capability information is transmitted on one or more of a media access, MAC, layer, a physical (PHY) layer, and an application layer. In some embodiments, the first and second portions comprises (together) all the capability information. In a particularly advantageous embodiment, the communication transceiver unit 51a is utilized as the sensing/localization transceiver unit. Thus, in this embodiment, only one transceiver unit is needed for communication and sensing/localization. By utilizing the communication transceiver unit as the sensing/localization transceiver unit, more efficient resource allocation, such as more efficient resource allocation for sensing is enabled/achieved. In some embodiments, the communication with the NW node 2 is performed in a first frequency range and the sensing and/or localization of the object is performed in a second frequency range. In some embodiments, the second frequency range does not overlap the first frequency range. In other embodiments, the second frequency range at least partially, such as fully, overlaps the first frequency range.

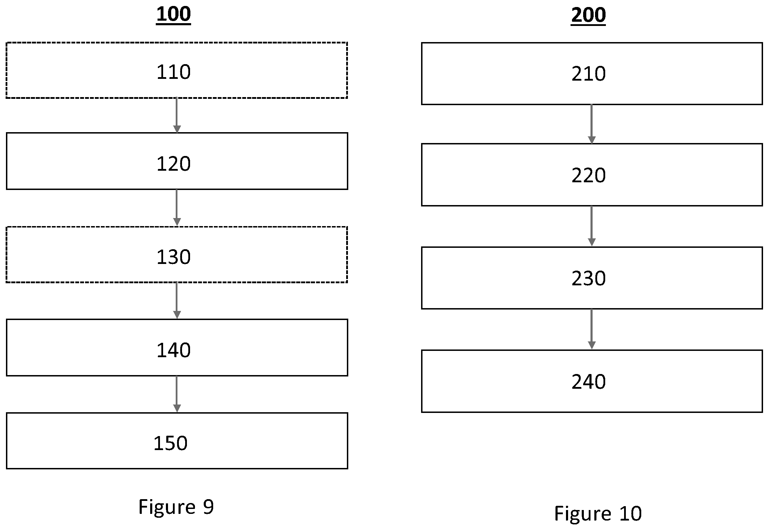

Figure 9 is a flow chart illustrating a method 100 of/for a control unit 50 for a wireless device 1. Figure 9 relates to a wireless device 1, having capabilities for radar operation, where the radar is used for sensing and localization of one or more objects or the environment surrounding the wireless device 1. Additionally, or alternatively, the wireless device 1 has capabilities for back scatter operation that is used for sensing and/or localization of one or more objects or the environment surrounding the wireless device 1. The wireless device 1 comprises a communication transceiver unit 51a and a sensing/localization transceiver unit 51b. The method 100 optionally comprises the step of associating 110 (by the control unit 50) the wireless device 1 with a NW node 2 for establishing a wireless communication channel. This is preferably performed through a connection setup, wherein the wireless device 1 connects to a network node 2. Establishing the communication channel may include common connection set up procedures, such as synchronization to the NW node 2, reading access information broadcasted from the NW node 2, performing random access as well as any connection setup procedure well known to a person skilled in the art. The method 100 comprises controlling 120, with the control unit 50, the communication transceiver unit to communicate with the network, NW, node. Furthermore, the method 100 optionally comprises establishing 130 (by the control unit 50) a connection to a remote server 3, connected to the NW node 2, the remote server 3 controlling the sensing and/or localization (operation) of the object. In this embodiment, the server 3 may control the established communication channel 4. Thus, the wireless device 1 establishes a wireless communication channel with the network node 2, and optionally establishes a connection to a remote server 3 controlling at least the sensing/localization operation, e.g., 11,13 or 21,23, of the wireless device 1. Moreover, the method 100 comprises controlling 140 (by the control unit 50 or by the remote server 3) the sensing/localization transceiver unit 51b to sense a surrounding object. The method 100 comprises controlling 150 the communication transceiver 51a to transmit capability information to the NW node 2. The capability information comprises information about a capability of the sensing/localization transceiver unit 51b to sense a surrounding object. The capability of the sensing/localization transceiver unit 51b to sense a surrounding object may be a radar capability or back scatter operation capability. The controlling optionally comprising causing the communication transceiver unit 51a to transmit, via the NW node 2, a control message comprising the capability information to the remote server 3 over the established wireless communication channel 4. In some embodiments, e.g., when the controlling 140 is performed by the remote server 3, the controlling 150 is performed before the controlling 140. In some embodiments, a first portion (or all) of the capability information is transmitted to the NW node on/over/via a radio resource control, RRC, layer.

The communication channel 4 may in some embodiments be over an interface between the Radio Access Network (RAN) and the wireless device 1. This is the case when the wireless device 1 is a smartphone or IoT device or a large intelligent surface device. Alternatively, the wireless device 1 forms part of the RAN, and hence may be a relay device, or a large intelligent surface device. In this case the communication channel may be a communication channel in the backhaul of the RAN. The advantages of transmitting the sensing and location capability information to the remote server controlling the sensing and location operation is that the server knows the wireless device capabilities and therefore can allocate correct resources (and improve efficiency) for sensing/localization of objects or an environment around the wireless device, so that the operation can be performed in an efficient manner (by giving as much information as possible to the server controlling the sensing operation).

The sensing/localization capabilities transmitted from the wireless device 1 to the remote server 3 may be one or more of:
1 Frequency ranges where the sensing and/or localization operation can be performed by the wireless device 1. For instance, the wireless device 1 may be able to perform back scatter or radar operation in one or more sub 6 GHz frequency ranges, or in one or more mmWave frequency ranges (e.g., 28, 39, 47, 60, 77, 120 or 273 GHz). Frequency ranges may also comprise maximum or minimum bandwidth of the sensing operation, e.g., sensing with maximum bandwidth 1 GHz in the 110-120 GHz frequency band. This may be advantageous, since the remote server 3 then knows which frequency ranges that can be sensed by the wireless device 1 and therefore can allocate resources giving improved/maximum information about the sensing operation, thereby improving the sensing operation (e.g., increase precision or efficiency of the operation).
2 Whether or not the wireless device 1 can perform back scatter operation. The capability information may include information whether the device 1 can perform monostatic back scattering (i.e., be the transmitter and receiver, typically requiring a more complex transceiver unit), only bistatic backscattering or no backscattering at all. In the case of only bistatic backscattering, the capability information may comprise capabilities whether the wireless device 1 only can perform transmission or reception or both (but not simultaneously). This may be advantageous as the remote server 3 then knows whether a back scatter operation can be achieved with a single wireless device 1 giving less complex back scatter scheduling requirements, or if two wireless devices are needed, requiring multiple wireless device coordination for successful backscattering.
3 Whether or not the wireless device 1 can perform radar operation. The capability information may also include a type of radar signal signature that can be transmitted. An example of a radar signal signature is radar pulses, with a certain length (and hence indirect a certain bandwidth). Another example is chirp radar signal signatures. In this case the capability information may comprise information for up-chirp (increasing frequency) or down-chirp (decreasing frequency) capabilities as well as the rate of change of frequency (upwards or downwards) which can be utilized. This may be advantageous, as the remote server 3 then knows which type of radar and hence also has an indication of location, velocity accuracy of objects and type of sensing that can be achieved by the wireless device 1, thus improving/maximizing the information about a sensing/localization operation thereby improving the sensing operation (e.g., increase precision or efficiency of the operation).
4 Simultaneous sensing and communication capabilities (of a transceiver unit 51a). In some embodiments, the frequency range for communication with the NW node 2 and the sensing operation may at least partly overlap. The capability information described below may also be useful even if the communication and sensing frequency ranges do not overlap, as there might be constraints, e.g., due to the wireless device transceiver architecture, for simultaneous communication and sensing.
5 Capabilities regarding whether or not the wireless device 1 can perform simultaneous communication and sensing may be reported to the remote server 3 in the control message. The capability information may include possibilities for or information about all possible combinations of transmission and reception of communication and sensing. For example, the wireless device 1 may only be able to perform communication or sensing during a certain time period. In another example, the wireless device 1 may only be capable of performing either communication or sensing transmission, while another wireless device is able to perform simultaneous communication and sensing reception. In yet another example, the wireless device 1 can perform simultaneous communication and sensing both for transmission and reception. In yet another example of simultaneous communication and sensing, the communication and sensing signals are closely tied to each other, for instance in joint backscatter/radar and communication scenarios. Here the transmitted signal may comprise or consist of a communication part and a sensing part. In one example a preamble may comprise the sensing part and an information part (non-preamble) of the transmitted signal may comprise the communication part. In another example, an information part (non-preamble) of the transmitted signal comprises both sensing and communication signals. Note that in these examples, the communication might be intended for either another wireless device 1 or the network node 2. This may be advantageous, as more efficient resource allocation for communication as well as sensing can be achieved.
6 Spatial resolution of sensing and localization capabilities. The wireless device 1 may have antenna arrays operating in frequency ranges where sensing/localization operation can be performed. The capability information may include information of spatial resolution of the sensing, i.e., in how narrow direction or beam a sensing operation can be made. The capability information may also include information about horizontal or vertical spatial resolution, e.g., azimuth and elevation angle, of the sensing operation. The capability information may also comprise information whether or not the wireless device 1 only can scan in a certain subspace of the sphere, due to the device size, and/or orientation. This may be determined by sensors such as gyro, compass, accelerometers, GPS or GNSS associated with (comprised, connected or connectable to) the wireless device 1. This may be advantageous, as spatial sensing information is known and each sensing operation can be optimized in respect of efficiency and/or resource allocation.
7 Sensing and/or localization operation power capabilities. The wireless device 1 may have a (frequency or signal signature dependent) transmit power limitation for transmitting sensing signals (for instance 10 dBm). This may be advantageous, as by knowing transmit power limitations the server can estimate the coverage of the sensing operation, which estimation may be used for improved/optimal sensor operation resource allocation.
8 Time duration and periodicity of sensing and/or localization operation capabilities. The wireless device 1 may have constraints in how often a sensing operation can be performed, or during how long time span a single sensing operation can be made. This may be advantageous, as knowing time constraints for sensing, the spectral sensing capacity of the entire communication and sensing system may be improved/optimized.
9 Sensing/localization measurement reporting capabilities. These capabilities describe how the sensing measurement can be reported over the communication channel. For instance, it can comprise information about measurement accuracy and/or type of measurement report capability.

In some embodiments the sensing/localization capabilities are defined as capability indices, where the indices are pre-defined, for instance in a standard covering the communication and/or sensing operations in a given frequency range. Example of such standard may be an IEEE standard (similar to 802.xx standards) or a cellular communication standard such as 3GPP 5G (and further releases Beyond 5G, 6G etc.). Each index may comprise a record of capabilities, such as
Capability index Z= [radar parameters, back scatter parameters, frequency range X1, X2, X3, ...]
with different parameter settings in respective sub-record. This may be advantageous, as more efficient transmission may be achieved.

In some embodiments, the control message comprising the capability information may be transmitted on a certain OSI (Open Systems Interconnection) layer. In one embodiment the capability information may be transmitted on a Radio Resource Control (RRC) layer.

In this embodiment, the capability information is mainly related to resources needed in the Radio Access Network (RAN), such as frequency ranges supported, sensing signatures supported, radar or back scatter supported, measurement report capabilities such as periodicity and accuracy constraints. In this case the remote server 3 is located inside the RAN and hence a part of the radio network infrastructure, and may be associated to one or more network nodes 2. Transmitting capability information/messages on the RRC layer is advantageous, as efficiency in utilizing radio resources is improved, e.g., since information can be transmitted in longer messages, and utilizing non-prioritized time frequency resources.

In other embodiments the capability information is transmitted on the Medium Access (MAC) or physical (Phy) Layer in RAN. In these embodiments, the capability information may be related to how fast the wireless device 1 can switch from one sensing operation to another, or from sensing to communication operation, or how fast a measurement report can be transmitted after a sensing operation. The MAC or Phy Layer can also be utilized if the wireless device 1 needs to change capability quickly, due to various reasons such as intermittent computation or power limitations of the wireless device 1, or due to fast radio resource load changes in the wireless communication system. In these embodiments, the remote server 3 may be associated with the network node 2, and hence control both network node communication and sensing operation. When there is a need for a fast change of capabilities, the utilization of MAC or Phy layer may improve radio resource utilization, e.g., improve efficiency, and/or reduce latency.

In yet another embodiment, the capability information can be transmitted above the RAN OSI layers, for instance on an application layer. In this case, the remote server 3 controlling the sensing/localization operation typically is not associated with the RAN, but instead is a remote server 3 on the Internet. In case sensing/localization of objects in the surroundings of the wireless device 1 is made on application level, it is an advantage to also have capability information, e.g., sent in application control messages, thereby reducing the signaling in the backhaul between RAN, Core Network and the external remote server.

In a further embodiment, the different sensing and/or localization operation capabilities are transmitted in control messages on different OSI layers, e.g., some capability information is transmitted on RRC while other capability information is transmitted on MAC layer, and hence the remote server 3 controlling sensing/localization operation may operate on several OSI layers. Transmitting capability information important for respective protocol layer on the respective protocol layer reduces the overhead signaling between different layers for instance in the remote server 3, in the RAN and/or in the core network, thereby improving the functionality and increasing capacity in the entire communication and sensing/localization system.

List of examples (1):
1. A control unit (50) for a wireless device (1), the wireless device comprising a communication transceiver unit (51a) and a sensing/localization transceiver unit (51b), the control unit being configured to control the communication transceiver unit to communicate with a network, NW, node (2) and configured to control the sensing/localization transceiver unit to sense and/or localize an object, the control unit further being configured to control the communication transceiver unit to transmit capability information to the NW node, wherein the capability information comprises information about a capability of the sensing/localization transceiver unit to sense and/or localize an object.
2. The control unit of example 1, wherein the control unit is further configured to: associate the wireless device with the NW node for establishing a wireless communication channel, preferably through a connection setup; and establish a connection to a remote server (3), connected to the NW node, the remote server controlling the sensing and/or localization of the object; and/or wherein controlling the communication transceiver unit to transmit capability information to the NW node comprises causing the communication transceiver unit to transmit, via the NW node, a control message comprising the capability information to the remote server over the established wireless communication channel.
3. The control unit of any of examples 1-2, wherein the capability information comprises one or more of: frequency ranges which can be utilized for sensing and/or localization of the object; backscattering capability of the sensing/localization transceiver unit; radar capability of the sensing/localization transceiver unit; simultaneous sensing and communication capability of the sensing/localization transceiver unit; spatial resolution of sensing and localization capabilities, such as directions; sensing and localization operation power limits; time duration and periodicity of sensing and localization operation capabilities; and sensing and localization measurement reporting capabilities.
4. The control unit of any of examples 1-3, wherein the capability information comprises sensing and location capability indices according to a pre-defined rule.
5. The control unit of any of examples 2-4, wherein the control message is transmitted on one or more of: a radio resource control, RRC, layer; a media access, MAC, layer; a physical, PHY, layer; and an application layer.
6. The control unit of any of examples 1-5, wherein the communication transceiver unit is utilized as the sensing/localization transceiver unit.
7. The control unit of any of examples 1-6, wherein the communication with the NW node is performed in a first frequency range and the sensing and/or localization of the object is performed in a second frequency range, the second frequency range at least partially overlapping the first frequency range.
8. A wireless device (1) comprising a communication transceiver unit (51a), a sensing/localization transceiver unit (51b) and the control unit (50) of any of examples 1-7.
9. A method (100) of a control unit (50) for a wireless device, (1) the wireless device comprising a communication transceiver unit (51a) and a sensing/localization transceiver unit (51b), the method comprising: optionally associating (110) the wireless device with a NW node (2) for establishing a wireless communication channel, preferably through a connection setup; controlling (120) the communication transceiver unit to communicate with the network, NW, node; optionally establishing (130) a connection to a remote server, connected to the NW node, the remote server controlling the sensing and/or localization of the object; controlling (140) the sensing/localization transceiver unit to sense a surrounding object; and controlling (150) the communication transceiver to transmit capability information to the NW node, wherein the capability information comprises information about a capability of the sensing/localization transceiver unit to sense a surrounding object, the controlling optionally comprising causing the communication transceiver unit to transmit, via the NW node, a control message comprising the capability information to the remote server over the established wireless communication channel.
10. A computer program product comprising a non-transitory computer readable medium (1900), having thereon a computer program comprising program instructions, the computer program being loadable into a data processing unit (1920) and configured to cause execution of the method of example 9 when the computer program is run by the data processing unit.

### Sensing configuration information for sensing and localizing an object (2)

When communication and sensing/localization operations such as radar and back scatter operations utilizes a common radio spectrum, there is a need for methods and apparatus controlling the communication as well as sensing and/or localization operations in such a manner that interference between the respective operations are reduced.

Figure 10 is a flow chart illustrating a method 200 of a control unit 50 for a wireless device 1. The wireless device 1 comprises a communication transceiver unit 51a and a sensing/localization transceiver unit 51b. The method 200 comprises setting up 210 a communication channel with a network, NW, node 2 or utilizing an existing communication channel already established with the NW node 2. In some embodiments, the setting up or utilizing an existing communication channel already set up for the NW node 2 is performed utilizing the communication transceiver unit 51a, i.e., the communication is transmitted over the communication channel via the communication transceiver unit 51a. In some embodiments, the communication channel utilizes a first frequency range. Furthermore, the method 200 comprises obtaining 220, from the NW node 2, sensing configuration information for sensing and localizing an object in the surroundings or the vicinity of the wireless device 1. In some embodiments, the sensing configuration information is obtained via the communication transceiver unit 51a. The sensing configuration information comprises radio channel resources allocated to transmit and/or receive sensing signals. Alternatively, or additionally, the sensing configuration information comprises sensing signal characteristics. Furthermore, the obtained sensing configuration information is associated with a sensing physical channel. Thus, the sensing configuration information comprises information about the sensing physical channel. Moreover, the sensing physical channel comprises radio channel resources allocated to transmit and/or receive sensing signals. The resources allocated to the sensing physical channel are allocated for sensing and localization of the object. The information about a sensing physical channel is indirect or direct. The sensing physical channel comprises or is associated with radio channel resources. In some embodiments, the sensing configuration information comprises the radio channel resources allocated to transmit and/or receive sensing signals, i.e., the sensing configuration information indirectly comprises information about the sensing physical channel. In some embodiments, the obtained sensing configuration information is combined with a predetermined rule, such as a standard rule to obtain complete sensing signal characteristics. Thus, it is not necessary to transmit a complete sensing signal characteristic, thereby saving bandwidth. Additionally, or alternatively the obtained sensing configuration information is combined with information based on a pre-defined rule, such as a standard, and stored in a lookup table, LUT, at the wireless device, to obtain complete sensing signal characteristics. Thus, it is not necessary to transmit a complete sensing signal characteristic, thereby saving bandwidth.

Moreover, the method 200 comprises transmitting and/or receiving 230 sensing signals in the radio channel resources allocated. Alternatively, or additionally, the method 200 comprises transmitting and/or receiving 230 sensing signals based on the obtained sensing signal characteristics. In some embodiments, the sensing signals are radar signals. In some embodiments, the sensing signals are backscatter signals. In some embodiments, the transmitting and receiving sensing signals is performed utilizing the sensing/localization transceiver unit 51b. In these embodiments, the control unit 50 causes/controls the sensing/localization transceiver unit 51b to transmit and receive the sensing signals. The method 200 comprises sensing and localizing 240 the object based on the transmitted and/or received sensing signals. Thus, an increased efficiency in localizing an object in the vicinity of a wireless device may be obtained. Alternatively, or additionally a more efficient allocation of radio channel resources may be obtained. In some embodiments the sensing and localizing the object is performed utilizing the sensing/localization transceiver unit 51b. In some embodiments the communication transceiver unit 51a is utilized as the sensing/localization transceiver unit 51b. However, in other embodiments, the communication transceiver unit 51a is a transceiver unit other than the sensing/localization transceiver unit 51b. In some embodiments, the allocated radio channel resources comprise frequency resources, time resources and/or spatial direction resources utilizable for performing the sensing. Furthermore, in some embodiments, the communication channel utilizes a first frequency range, the allocated radio channel resources comprise frequency resources, the frequency resources comprise a second frequency range and the first and second frequency ranges at least partly overlap. Moreover, in some embodiments, the sensing physical channel is a common sensing physical channel. In some embodiments, the sensing physical channel is a shared sensing physical channel. Furthermore, in some embodiments, the sensing physical channel is a dedicated sensing physical channel. Moreover, in some embodiments, the sensing physical channel is a Radar Physical Channel, and the sensing signals are radar signals. In some embodiments, the sensing physical channel is a Backscatter Physical Channel, and the sensing signals are backscatter signals.

As illustrated in figure 17 in some embodiments a control unit 50 is provided. The control unit 50 is for a wireless device 1. The wireless device 1 comprises a communication transceiver unit 51a and a sensing/localization transceiver unit 51b. The control unit 50 is configured to set up a communication channel with a network, NW, node 2 or utilize an existing communication channel with the NW node 2. To this end, the control unit 50 may be associated with (e.g., operatively connectable, or connected to) a NW node communication establishment unit (e.g., NW node communication establishment circuitry or NW node communication establishment module). Furthermore, the control unit 50 is configured to obtain sensing configuration information for sensing and localizing an object in the surroundings of the wireless device 1 from the NW node 2. To this end, the control unit 50 may be associated with (e.g., operatively connectable, or connected to) a sensing configuration reception unit (e.g., sensing configuration reception circuitry or sensing configuration reception module). The sensing configuration comprises information about a sensing physical channel comprising radio channel resources allocated to transmit and receive sensing signals and/or sensing signal characteristics. Moreover, the control unit 50 is configured to transmit and receive sensing signals in the radio channel resources allocated and/or based on the obtained sensing signal characteristics. To this end, the control unit 50 may be associated with (e.g., operatively connectable, or connected to) a sensing/localization transceiver unit 51b (e.g., sensing/localization transceiver circuitry or sensing/localization transceiver module). The control unit 50 is configured to sense and localize the object based on the transmitted and received sensing signals. To this end, the control unit 50 may be associated with (e.g., operatively connectable, or connected to) a sensing and localization unit (e.g., sensing and localization circuitry or sensing and localization module).

In some embodiments, the wireless device 1 comprises a communication transceiver unit 51a, a sensing/localization transceiver unit 51b and the control unit 50 described above.

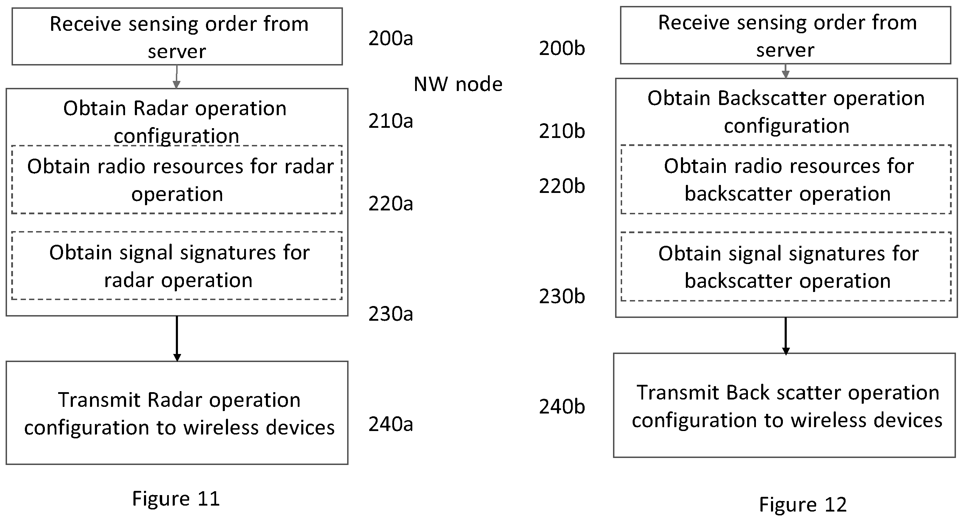

Figures 11 and 12 shows flow charts for two different embodiments of the invention. Figure 11 discloses a NW node operation in case the sensing and location of surrounding object(s) is made using radar, while figure 12 discloses a NW node operation when back scatter is used for sensing and localization. A control unit 60 in a NW node 2 receives a sensing order from a server 3 controlling radar pulses/signals 11,13, back scatter operation signals 21,23 or other sensing signals. The sensing order specifies that a wireless device 1 should perform sensing and/or localization operations/actions, such as radar operations/actions 200a, backscatter operations/actions 200b or other sensing operations/actions, regarding the surroundings or the vicinity of the wireless device 1. The server 3 may be associated to RAN, core network or Internet, as has been described above. The control unit 60 then obtains the sensing configuration information the wireless device 1 needs for performing the radar operations/actions 210a, the back scatter operations/actions 210b or other sensing operations/actions (based on the received sensing action information). The sensing configuration information comprises information about a sensing physical channel. The sensing physical channel comprises radio channel resources allocated to transmit and/or receive sensing signals. Thus, the sensing configuration information may comprise radio (channel) resources needed for the wireless device 1 to perform radar operations/actions 220a, back scatter operations/actions 220b or other sensing operations/actions. The configuration may also comprise signal characteristics needed for the wireless device 1 to perform radar operations/actions 230a, back scatter operations/actions 230b or other sensing operations/actions.

The control unit 60 may obtain the sensing configuration information by checking which physical radio (channel) resources are currently not needed for communication with other wireless devices. A subset/portion (or all) of these non-used radio (channel) resources may be allocated to sensing (transmitting and/or receiving sensing signals) for the wireless device 1. In another embodiment, the NW node 2 or the control unit 60 thereof may allocate sensing resources based on radio channel measurement feedback from a wireless device 1. The radio channel measurements may indicate/determine radio channel resources, e.g., frequency ranges, with no or low interference (e.g., with interference lower than a threshold), and these radio channel resources may then be configured/allocated for sensing operations/actions (e.g., transmission and/or reception of sensing signals). In yet another embodiment the NW node 2 or the control unit 60 thereof may perform a scanning of the radio channel itself and determine radio channel resources, such as frequency ranges, with no or low interference (e.g., with interference lower than a threshold), and these radio (channel) resources (frequency ranges) may be configured for sensing operations/actions (e.g., transmission and/or reception of sensing signals).

Thus, a control unit 60 for a network (NW) node 2 is provided. The NW node 2 is connectable or connected via a wireless communication channel to a wireless device 1. In some embodiments, the control unit 60 is configured to: receive radio channel measurement feedback (for/regarding the wireless communication channel) from the wireless device 1; allocate radio channel resources to a sensing physical channel for transmitting and/or receiving sensing signals based on the received radio channel measurement feedback; and transmit sensing configuration information to the wireless device 1, wherein the sensing configuration information comprises information about the sensing physical channel (and about the allocated radio channel resources). Furthermore, in some embodiments, the control unit 60 is configured to: scan the wireless communication channel; determine frequency ranges (of the wireless communication channel) with no or low interference; allocate a portion of the determined frequency ranges (with no or low interference) to a sensing physical channel for transmitting and/or receiving sensing signals; and transmit sensing configuration information to the wireless device 1. The sensing configuration information comprises information about the sensing physical channel. The NW node 2 may comprise the control unit 60. Furthermore, a system (not shown) may comprise one or more, such as 10 or 100, wireless devices 1 and one or more, such as 2, 4 or 10, network nodes 2.

The control unit 60 may further obtain the sensing configuration information based on received capability information for the wireless device 1, as discussed above under "Wireless device sensing capability signaling" above. For instance, the wireless device 1 may only be able to perform sensing using radar operations/actions, and hence the control unit 60 may only configure sensing configuration associated to radar operations/actions. In another example, the wireless device 1 may only be able to perform sensing in a specific frequency range, such as 60-100 GHz, and hence the NW node 2 may only send sensing configuration information related to that frequency range. In yet another example, the wireless device 1 may only be capable of performing back scatter signal reception. In that case the NW node 2 only sends sensing configuration information related to reception of a back scatter signal. The back scatter signal then needs to be transmitted by another wireless device.

Then the control unit 60 configures the NW node 2 to transmit 240a, 240b a message, such as a control message, comprising configuration information associated with the radar, back scatter, or other sensing operation to the wireless device 1. This may be advantageous, since the wireless device knows which configuration that should be used for the sensing operation, and since the NW node can allocate free radio (channel) resources for sensing, thereby reducing the overall interference in the radio system. The message is sent on the established communication channel and transmitted over a first frequency range. The communication channel may in some embodiments be over an interface between the RAN and the wireless device 1. This is the case when the wireless device 1 for instance may be a smartphone or IoT device or a large intelligent surface device. In some embodiments, the wireless device 1 is part of the RAN, and hence may be a relay device, or a large intelligent surface device. In this case the communication channel may be a communication channel in the backhaul of the RAN.

The radio channel resources in the sensing configuration information may comprise time/frequency radio (channel) resources. Additionally, or alternatively, the sensing configuration information comprises spatial resource information, i.e., information about in which physical direction the radar or back scatter operation should take place. This may be advantageous, especially if the wireless device 1 comprises an antenna array for sensing, and hence can perform sensing and localization in specific spatial directions. The frequency resources for sensing may be allocated a second frequency range. The second frequency range may or may not overlap the first frequency range used for communication between the wireless device 1 and the NW node 2.

The sensing configuration information may also include a semi-persistent scheduling scheme where frequency or spatial resources may be used for sensing and localization of the environment around the wireless device 1. The semi-persistent scheduling resources may vary over frequency and spatial direction over time.

The sensing configuration may in some embodiments be a configuration of a Sensing Physical Channel, giving information of physical, such as frequency, time and/or spatial direction, resources that the wireless device 1 can use to perform the sensing, radar, or back scatter operations. In some embodiments, the physical resources, such as frequency resources (e.g., the second frequency range), utilizable for performing the sensing, radar or back scatter operations/actions are shared with communication operations/actions (e.g., frequency resources utilized by the communication channel, such as the first frequency range). The sensing physical channel may be either common to all wireless devices (Common Sensing Physical Channel) or shared by a number of wireless devices (Shared Sensing Physical Channel) or may be dedicated to a specific wireless device (Dedicated Sensing Physical Channel). In some embodiments, the sensing physical channel may be a Radar Physical Channel for radar operations and in other embodiments, the sensing physical channel may be a Backscatter Physical Channel. Configuring a specific sensing physical channel for sensing of the environment or localization of object(s) in the surrounding of a wireless device may be advantageous since specific radio resources and signals to be transmitted in these resources can be defined thereby reducing the interference with communication resources in case sensing and communication share the same radio spectrum.

The sensing configuration information may comprise sensing signal characteristics. Examples of such characteristics are:
- signals to be used for radar operation(s). For instance, it could be a radar pulse, with information about the pulse length, or a chirp radar signal including information of whether up-chirp (increasing frequency) or down-chirp (decreasing frequency) should be used. It could also include information about rate of change of frequency (upwards or downwards) in the chirp signal that should be used.
- baseband or radio signal(s) to be transmitted in case of a backscattering operation, typically on a carrier wave, and with information about time length of the signal(s) and the carrier frequency to use.
- Signal(s) to be used in case a joint communication and radar operation should be performed, e.g., in the same frequency band. Such a signal may comprise/consist of a preamble that can be used for radar operation, and a modulated signal, wherein the modulated signal comprises data information, such as communication signals/data. In another example, the signal, such as the entire signal, comprises data information, such as communication signals/data, and the signal, such as the entire signal, is configured for radar operation, i.e., have characteristics suitable for radar operation. Note that in the case of joint communication and radar operation, i.e., using the same signal for information transfer as well as for radar purposes, the communication, may be with another wireless device instead of with the NW node 2.

- Sensing signal power transmission level.
- Sensing signal transmission time.
- Sensing signal reception time. In case of for instance bistatic back scatter operation, the wireless device 1 itself does not perform the transmission of the back scatter signal, and therefore the wireless device 1 needs to be configured with a specific reception time for the time of reception of the sensing signal.

In some embodiments, the sensing configuration information comprises information about a sensing physical channel to be utilized. Optionally, the sensing configuration information may directly or indirectly comprise information about whether a radar signal or a backscatter signal is to be utilized, e.g., the sensing physical channel may be a Radar Physical Channel for radar operations or the sensing physical channel may be a Backscatter Physical Channel. The baseband or radio signal to transmit for sensing and localization of the environment may be pre-defined in a standard (such as Beyond 5G, 6G or xG, x>6 standard document). The configuration of signal type to use for sensing may then be an index, pointing for instance to a specific radar pulse, chirp signal (radar operation), carrier wave (back scatter) or preamble sequence (joint radar and communication operation) to use, wherein the signal definition is set in the standard document. This may be advantageous as such an approach of pre-defining a sensing physical channel in a standard reduces the sensing configuration information to be transmitted over the radio interface, thereby increasing the spectral capacity of the entire radio system.

In some embodiments, the control message comprising the sensing configuration information is transmitted on a certain OSI (Open Systems Interconnection) layer. In one embodiment the sensing configuration information is transmitted on a Radio Resource Control (RRC) layer. This could for instance be the case if the sensing resources should be allocated over a longer time period (10ths of milliseconds or more). Then RRC signaling and configuration can be used.

In another embodiment the control message is sent on MAC or Phy layer. As an example, the sensing may be allocated on a shorter time scale (less than 10ths of milliseconds) and MAC and/or Phy signaling may be applicable. In yet another example, the sensing configuration information is transmitted using several OSI layers. For instance, the RRC is used for configuring some overall sensing resources to one or more wireless devices. Then MAC or Phy layer configuration is used to activate or deactivate sensing operation on the RRC configured radio resources. As an example, the remote server 3 orders the NW node 2 to configure one or more wireless devices 1 to perform sensing and localization of the radio environment. The NW node 2 then obtains radio resources for sensing and configures the wireless devices 1 over the RRC layer. Then the NW node 2 in a time interleaved fashion activates and deactivates each wireless device 1 to perform sensing operations one or a few wireless device(s) at a time. This may be advantageous as using one or more of RRC, MAC or Phy layer for sensing operation configuration, the sensing and localization of surrounding objects in an environment can be scheduled in a more spectral efficient way among a number of wireless devices.

In some embodiments the configuration message is made on an application level. This could typically be used, but is not limited to, when the sensing, radar or back scatter operation is performed in an unlicensed band, or in a second frequency range not overlapping with the first frequency range. In this case the server 3 may be on the Internet, and the configuration information is sent "over- the-top", above RAN, OSI layers and hence the NW node sensing configuration is mainly a configuration of an application data packet to the wireless device 1.

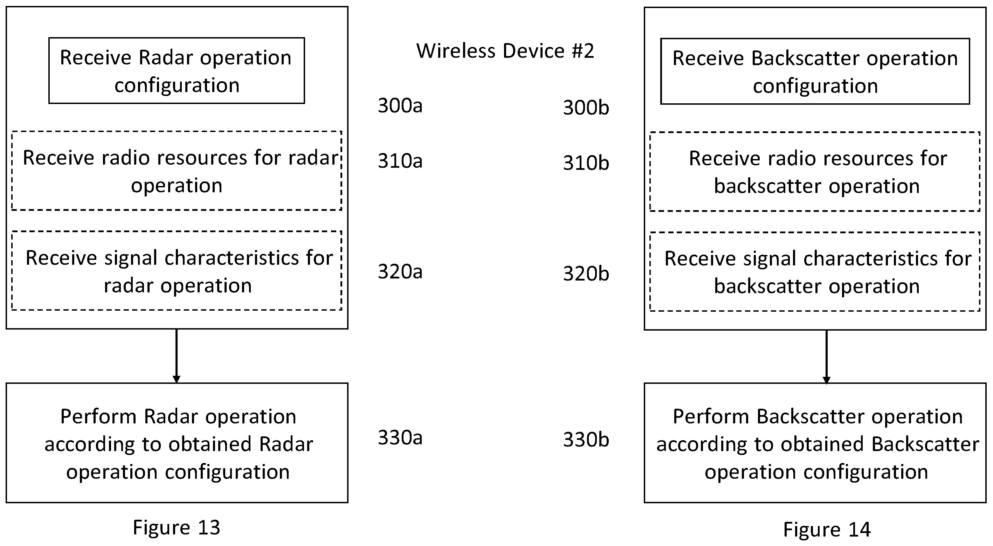

Figure 13 is a flow chart illustrating a method for a wireless device, wherein the sensing and localization of surrounding objects or the surrounding radio environment around the wireless device, is made using radar. The method may be the method 200 described above. The wireless device 1 obtains/receives 300a a radar operation configuration (including information about 11 and 13 in fig. 2). The sensing configuration information, e.g., a subset of or all information needed for the sensing configuration may be received in a control message transmitted over a communication channel from a NW node 2, which the wireless device 1 is associated with (or connectable/connected to). The wireless device 1 may receive 310a radio resources for radar. Additionally, or alternatively, the wireless device 1 may receive 320a signal characteristics for radar. Some part(s) of the sensing configuration, such as signal characteristics may further be obtained from a pre-defined rule, such as from a standard.

Figure 14 is a flow chart illustrating a method for a wireless device, wherein the sensing and localization of surrounding objects or the surrounding radio environment around the wireless device, is made using back scatter. The method may be the method 200 described above. The wireless device 1 obtains/receives 300b a back scatter operation configuration (including information about 21 and 23). The sensing configuration information, e.g., a subset of or all information needed for the sensing configuration may be received in a control message transmitted over a communication channel from a NW node 2, which the wireless device 1 is associated with (or connectable/connected to). The wireless device 1 may receive 310b radio resources for back scatter. Additionally, or alternatively, the wireless device 1 may receive 320b signal characteristics for back scatter. Some part(s) of the sensing configuration, such as signal characteristics may further be obtained from a pre-defined rule, such as from a standard.

In some embodiment the wireless device 1 may be configured with a sensing physical channel as discussed above. The configuration associates physical resources allocated to the sensing physical channel, which the wireless device 1 may utilize to perform sensing. The wireless device 1 may then perform 330a radar operation or perform 330b back scatter operation according to the obtained sensing configuration.

In some embodiments, the wireless device 1 may need to perform a listen before talk (LBT) procedure prior to transmitting the sensing signal 11, 21 according to the received sensing configuration. This may be the case for instance if a common sensing physical channel is configured (or if operating in an unlicensed frequency band), and there may be other wireless devices performing sensing. Then the wireless device 1 needs to measure whether there are any sensing signals present, and if so, wait for a randomized time prior to doing a new LBT. If sensing signal power level is estimated to be below a threshold, the wireless device 1 is allowed to perform the sensing operation and otherwise the wireless device 1 is not allowed to perform the sensing operation.

List (2) of examples of the network node:
1. A control unit (60) for a network, NW, node (2), the NW node (2) being connectable via a wireless communication channel to a wireless device (1), the control unit (60) being configured to: a. receive a sensing order from a server (3), the sensing order comprising sensing operation/action information specifying sensing operations/actions to be performed by the wireless device (1); b. obtain sensing configuration information based on the received sensing operation/action information, the sensing configuration information comprising sensing signal characteristics and/or radio channel resources allocated to transmit and/or receive sensing signals; c. transmit the sensing configuration information to the wireless device (1) and instruct the wireless device (1) to perform the specified sensing operations/actions to sense and localize an object in the surroundings of the wireless device (1) based on the sensing signal characteristics and/or radio channel resources allocated to transmit and/or receive sensing signals.
2. The control unit (60) of example 1, wherein the sensing operations to be performed by the wireless device (1) are radar operations.
3. The control unit (60) of example 1 or 2, wherein the sensing operations to be performed by the wireless device (1) are back scatter operations.
4. The control unit (60) of any of examples 1-3, wherein the radio channel resources comprise one or more of a time/frequency resource and a spatial resource, such as direction.
5. The control unit (60) of example 4, wherein the sensing configuration information is transmitted to the wireless device (1) in a control message in a first frequency range and wherein the frequency resource is in a second frequency range.
6. The control unit (60) of example 5, wherein the second frequency range at least partly or fully overlap the first frequency range or wherein the second frequency range does not overlap the first frequency range.
7. The control unit (60) of any of examples 1-6, wherein the obtained sensing configuration information is associated with a sensing physical channel, and wherein the resources allocated to the sensing physical channel are allocated for sensing and localization of the object.
8. The control unit (60) of any of examples 1-7, wherein the sensing signal characteristics comprise one or more of: a. A radar operation signal; b. A signal for obtaining information from a wireless device (1) operating using backscattering; c. A signal for waking up a wireless device (1) operating using backscattering; d. A signal for joint communication and radar operation; e. A transmission power level for a sensing signal; and f. A transmission or reception time instant for a sensing signal.
9. The control unit (60) of any of examples 5-8, wherein the control message is transmitted on one or more of a radio resource control, RRC, layer; a media access, MAC, layer; a physical, PHY, layer; and an application layer.
10. A network, NW, node (2) comprising the control unit (60) of any of examples 1-9.

List (2) of examples of the wireless unit (for the wireless:
1. A control unit (50) for a wireless device (1), the wireless device comprising a communication transceiver unit (51a) and a sensing/localization transceiver unit (51b), the control unit being configured to control the communication transceiver unit to communicate with a network, NW, node (2) and configured to control the sensing/localization transceiver unit to sense and/or localize an object, the control unit further being configured to control the communication transceiver unit to transmit capability information to the NW node, wherein the capability information comprises information about a capability of the sensing/localization transceiver unit to sense and/or localize an object.
2. The control unit of example 1, wherein the control unit is further configured to: associate the wireless device with the NW node for establishing a wireless communication channel, preferably through a connection setup; and establish a connection to a remote server (3), connected to the NW node, the remote server controlling the sensing and/or localization of the object; and/or wherein controlling the communication transceiver unit to transmit capability information to the NW node comprises causing the communication transceiver unit to transmit, via the NW node, a control message comprising the capability information to the remote server over the established wireless communication channel.
3. The control unit of any of examples 1-2, wherein the capability information comprises one or more of: frequency ranges which can be utilized for sensing and/or localization of the object; backscattering capability of the sensing/localization transceiver unit; radar capability of the sensing/localization transceiver unit; simultaneous sensing and communication capability of the sensing/localization transceiver unit; spatial resolution of sensing and localization capabilities, such as directions; sensing and localization operation power limits; time duration and periodicity of sensing and localization operation capabilities; and sensing and localization measurement reporting capabilities.
4. The control unit of any of examples 1-3, wherein the capability information comprises sensing and location capability indices according to a pre-defined rule.
5. The control unit of any of examples 2-4, wherein the control message is transmitted on one or more of: a radio resource control, RRC, layer; a media access, MAC, layer; a physical, PHY, layer; and an application layer.
6. The control unit of any of examples 1-5, wherein the communication transceiver unit is utilized as the sensing/localization transceiver unit.
7. The control unit of any of examples 1-6, wherein the communication with the NW node is performed in a first frequency range and the sensing and/or localization of the object is performed in a second frequency range, the second frequency range at least partially overlapping the first frequency range.
8. A wireless device (1) comprising a communication transceiver unit (51a), a sensing/localization transceiver unit (51b) and the control unit (50) of any of examples 1-7.
9. A method (100) of a control unit (50) for a wireless device, (1) the wireless device comprising a communication transceiver unit (51a) and a sensing/localization transceiver unit (51b), the method comprising: optionally associating (110) the wireless device with a NW node (2) for establishing a wireless communication channel, preferably through a connection setup; controlling (120) the communication transceiver unit to communicate with the network, NW, node; optionally establishing (130) a connection to a remote server, connected to the NW node, the remote server controlling the sensing and/or localization of the object; controlling (140) the sensing/localization transceiver unit to sense a surrounding object; and controlling (150) the communication transceiver to transmit capability information to the NW node, wherein the capability information comprises information about a capability of the sensing/localization transceiver unit to sense a surrounding object, the controlling optionally comprising causing the communication transceiver unit to transmit, via the NW node, a control message comprising the capability information to the remote server over the established wireless communication channel.
10. A computer program product comprising a non-transitory computer readable medium (1900), having thereon a computer program comprising program instructions, the computer program being loadable into a data processing unit (1920) and configured to cause execution of the method of example 9 when the computer program is run by the data processing unit.

### Sensing measurement report configuration (3)

As exemplified above, when sensing and/or localization operations such as radar or back scatter operations in a wireless device 1 is controlled by a remote server 3, there may be a need for configuration of measurement reports associated with the sensing and/or localization operation that should be transmitted from the wireless device 1 over a communication channel to a network, NW, node 2, which node in turn can forward the measurement reports to the remote server 3.

In some embodiments a control unit 50 is provided as illustrated by figure 17. The control unit 50 may be comprised in a wireless device 1 (as shown in figure 17). Alternatively, the control unit 50 is external to the wireless device (not shown). The control unit 50 is for a wireless device 1. The wireless device 1 comprises a first set of transceiver units 51a, 51e and a second set of transceiver units 51b, 51c, 51d. The transceiver units 51a, 51b, 51c, 51d, 51e are connectable, such as connected, to the control unit 50. Although the second set of transceiver units is described herein as consisting of transceiver units not being part of the first set of transceiver units, in some embodiments, the first set of transceiver units 51a, 51b, 51c, 51d, 51e is the same as the second set of transceiver units 51a, 51b, 51c, 51d, 51e and in yet other embodiments the first set of transceiver units 51a, 51b, 51c overlaps the second set of transceiver units 51b, 51c, 51d, 51e. The control unit 50 is configured to control the first set of transceiver units 51a, 51e to perform communication, utilizing a communication channel, with a network, NW, node 2. To this end, the control unit 50 may be associated with (e.g., operatively connectable, or connected to) a communication transceiver control unit (e.g., communication transceiver control circuitry or communication transceiver control module).

Furthermore, the control unit 50 is configured to control the second set of transceiver units 51b, 51c, 51d to sense and/or localize a surrounding object, i.e., an object in the vicinity of the wireless device 1. To this end, the control unit 50 may be associated with (e.g., operatively connectable, or connected to) a sensing/localization transceiver control unit (e.g., sensing/localization transceiver control circuitry or sensing/localization transceiver control module). The control unit 50 is further configured to receive a sensing configuration from the NW node 2. To this end, the control unit 50 may be associated with (e.g., operatively connectable, or connected to) a sensing configuration receiver (e.g., sensing configuration receiving circuitry or sensing configuration receiving module). The sensing configuration comprises a sensing measurement report configuration. In some embodiments, the sensing measurement report configuration specifies or comprises information about radio resources to utilize for transmitting the measurement result, i.e., a measurement report, to the NW node 2. The radio resources may be time resources, frequency resources and/or channel resources. Furthermore, the control unit 50 is configured to cause the second set of transceiver units 51b, 51c, 51d to perform a sensing operation for sensing and/or localizing the surrounding object in accordance with the received sensing configuration. To this end, the control unit 50 may be associated with (e.g., operatively connectable, or connected to) a sensing operation unit (e.g., sensing operation circuitry or sensing operation module). Moreover, the control unit 50 is configured to obtain a measurement result based on the sensing operation. To this end, the control unit 50 may be associated with (e.g., operatively connectable, or connected to) a measurement result reception unit (e.g., measurement result reception circuitry or measurement result reception module). The measurement result comprises one or more of a response signal, such as a radio channel impulse response signal/message; a response signal time spread and amplitude variation measure; a spatial direction of the response signal, such as a spatial direction of the radar signal reflection, preferably a spatial radio channel impulse response; doppler, velocity or direction information associated with the surrounding object; an object identifier, the object identifier determined based on a received response signal, such as a radar signal reflection; information related to a difference between a measurement from a previous radar operation and a corresponding measurement of the present radar operation. In some embodiments, the sensing measurement report configuration specifies what the measurement result comprises, i.e., the content of the (sensing) measurement report/measurement result (e.g., a response signal, a response signal time spread and amplitude variation measure etc.). The control unit 50 is configured to cause transmission of the measurement result to the NW node 2 utilizing the sensing measurement report configuration. To this end, the control unit 50 may be associated with (e.g., operatively connectable, or connected to) a NW node communication unit (e.g., NW node communication circuitry or NW node communication module). In some embodiments, the measurement result is transmitted to the NW node 2 in a control message. The control message is transmitted on one or more of a radio resource control, RRC, layer; a media access control, MAC, layer; a physical, Phy, layer; and an application layer. Additionally, or alternatively, the measurement result comprises one or more of an identifier for the backscatter device and a sensor value received from the backscatter device. In some embodiments, the sensing operation is a radar operation, and the obtained measurement result is based on reception of a response signal, such as a radar signal reflection. In some embodiments, the sensing operation is a backscatter operation, and the obtained measurement result is based on a response signal, such as an information signal, received from a backscatter device 22. In some embodiments, the control unit 50 is further configured to classify the object by comparing the received response signal with previously received response signals having assigned object identifiers to find a best match. To this end, the control unit 50 may be associated with (e.g., operatively connectable, or connected to) a classifier (e.g., classification circuitry or classification module). The previously received response signals may be stored together with corresponding object identifiers in a memory at the wireless device 1. The object identifier corresponding to the best match, i.e., the object identifier of the previously received response signal that resembles the presently received response signal the most, is included in the measurement result.

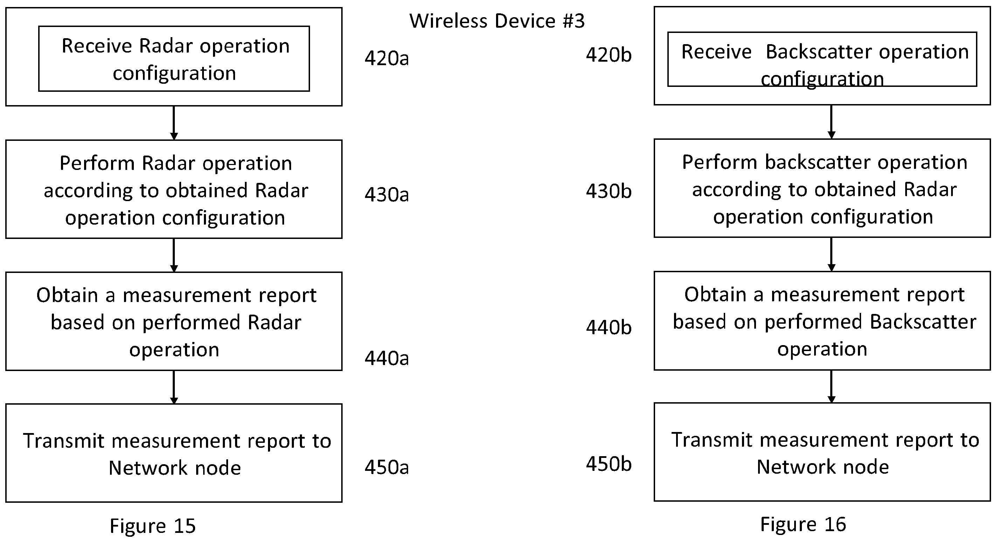

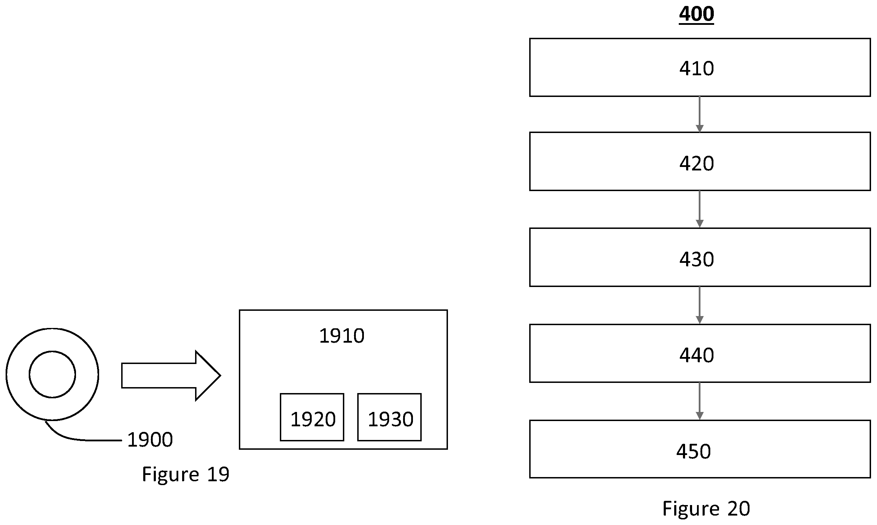

Figure 20 is a flow chart illustrating a method 400 of a control unit 50 for a wireless device 1. The wireless device 1 comprises a first and a second set of transceiver units 51a, 51b, 51c, 51d, 51e. The first set may comprise transceiver units 51a, 51e and the second set may comprise transceiver units 51b, 51c, 51d. The transceiver units 51a, 51b, 51c, 51d, 51e are connectable, such as connected, to the control unit 50. The method comprises controlling 410 the first set of transceiver units to perform communication, utilizing a communication channel, with a network, NW, node 2. Furthermore, the method 400 comprises receiving 420 a sensing configuration from the NW node 2. The sensing configuration comprises a sensing measurement report configuration. Alternatively (an alternative to receiving 420), the method 400 comprises receiving a set of configurations from the NW node 2, the set of configurations comprising a sensing configuration and a sensing measurement report configuration. As another alternative (an alternative to receiving 420), the method 400 comprises receiving a sensing configuration and a sensing measurement report configuration from the NW node 2. As yet another alternative (an alternative to receiving 420), the method 400 comprises receiving a signal from the NW node 2, the received signal being indicative of/comprising a sensing configuration and a sensing measurement report configuration. Moreover, the method comprises controlling 430 the second set of transceivers to perform a sensing operation for sensing and/or localizing a surrounding object in accordance with the received sensing configuration. The method comprises obtaining 440 a measurement result based on the sensing operation. Furthermore, the method comprises transmitting 450 the measurement result to the NW node 2 utilizing the sensing measurement report configuration. Figures 15 and 16 are flow charts illustrating methods for a wireless device 1. The methods may be part of the method 400 illustrated in figure 20. Figure 15 illustrates wireless device operations in case the sensing and localization of at least one surrounding object is made using radar, while figure 16 illustrates wireless device operations when back scatter is used for sensing and localization. As shown in figures 15 and 16, the wireless device 1 (or the control unit 50 associated therewith) receives 420 a sensing configuration, such as radar operation configuration 420a or back scatter operation configuration 420b, from the network node 2. In some embodiments the sensing configuration is obtained partly from a pre-defined rule, such as a rule according to a communication standard or a sensing and/or a localization standard and partly from information received from the NW node 2. For instance, the sensing configuration may comprise an index that points to a specific configuration in a specification document relating to a standard, that the wireless device 1 should use in the sensing operation. The sensing configuration includes at least a (sensing measurement report) configuration related to sensing operation measurement report procedures the wireless device 1 should perform to send measurement reports associated to the sensing operation and the sensing configuration may also comprise any of the sensing configuration information specified above under "Sensing configuration information for sensing and localizing an object (2)". Thus, the sensing measurement report configuration specifies e.g., how to send the sensing measurement report, what to include in the sensing measurement report and/or how to code the sensing measurement result (included in the sensing measurement report), i.e., what coding rule(s) to apply to the measurement result for transmission. In some embodiments, the (pre-defined) coding rule is/specifies that the measurement result is coded as an index e.g., according to one or more code books. As an example, the index may indicate that the measurement result comprises one or more of a response signal, such as a radio channel impulse response signal/message; a response signal time spread and amplitude variation measure etc. As another example, the index may indicate a specific value or range of e.g., the radio channel impulse response signal/message or of a response signal time spread and amplitude variation measure etc. By coding the measurement result as an index, measurement report signaling is reduced.

The control unit 50 then controls 430 the second set of transceivers to perform a sensing operation for sensing and/or localizing a surrounding object in accordance with the received sensing configuration. The sensing operation may be a radar operation (430a) or a back scatter operation (430b). In case of radar operation, the wireless device transmits, via transceiver units of the second set, a radar signal that could be of any type, and has been exemplified above, and then the wireless device 1 receives a reflection of the radar signal via the transceiver units of the second set. In some embodiments the wireless device 1 is only configured for receiving radar reflections, e.g., by configuring a time instant (or time period) the wireless device 1 should sense the configured frequency range for radar operations. In case of back scatter operation, the wireless device 1 (or the control unit 50 thereof) may either be configured to perform transmit and receive back scatter operation (monostatic back scattering), or only be configured to receive back scatter signals reflected from back scatter devices (bistatic back scattering). The wireless device 1 (or the control unit 50 associated therewith) then obtains 440 a measurement result associated with the performed radar operation (440a) or back scatter operation (440b).

In case of radar (or backscatter) operation, the measurement result may comprise:
- a radio channel impulse response, containing time delays and power/amplitude levels on respective reflected pulses, where the impulse response is associated with objects the radar (or backscatter) signal is reflected on. This may be advantageous as more accurate sensing is achieved, thereby enabling higher resolution of sensed objects.
- a simplified impulse response comprising a reflected radar (or backscatter) signal time spread variation measure and signal amplitude or power variation measure. This may be advantageous as a reduced measurement report signaling is achieved, thereby increasing capacity in the system.
- a spatial direction measurement in which the radar (or backscatter) reflection is captured. The wireless device may have (be connectable/connected to) antenna arrays operating in some frequency ranges, where sensing and/or localization operation can be performed. The sensing may be done in specific spatial directions or beams and measurement result may comprise spatial information tied to the measurement result. This may be advantageous as more accurate sensing is achieved, thereby enabling higher resolution of sensed objects.
- Doppler, velocity and/or direction information associated with an object creating the radar (or backscatter) reflection. This information may be sent in the measurement report.
- delta information, i.e., the difference in information from an obtained measurement of an earlier radar (or backscatter) operation, such as the latest radar (or backscatter) operation, and obtained information from a current radar (or backscatter) operation. This may be advantageous as by transmitting only delta information the amount of data transmitted in a measurement report can be kept to a minimum, thereby reducing signaling.

In further embodiments the measurement report may comprise an object identifier, wherein the identifier identifies one of several objects that may be tabulated in a look-up table. In order to find the object identifier, the wireless device 1 can, based on a received radar (or backscatter) reflection signal classify the signal as one or more of the objects in the object list and transmit the associated object identifier in the measurement report. The classification may be done by machine learning, deep learning, or artificial intelligence methods. For instance, one may in advance transmit known radar (or backscatter) signals towards different objects and capture the reflected radar (or backscatter) signal responses. Based on the known radar (or backscatter) signals and the reflected radar (or backscatter) signal responses, a neural network or other artificial intelligence is trained to recognize different objects. The neural network parameters are then stored in the wireless device 1 and based on a received reflected radar (or backscatter) signal the neural network classifies the received reflected radar (or backscatter) signal as a certain object. This may be advantageous as by sending object identifiers the amount of data transmitted in a measurement report can be reduced/kept to a minimum.

In case of back scatter operation, the measurement report may comprise information contained in the reflected signal from the back scattering device 22. This information may comprise an identity of the back scattering device 22 or may comprise information about a sensor value, and optionally about a sensor type, associated with the back scatter device 22.

The wireless device 1 transmits the sensing measurement result, e.g. in a control message, to the NW node 2 over the established communication channel. The transmitting 430a may comprise radar measurement results in case of radar operation. The transmitting 430b may comprise back scatter measurement results in case of back scatter operation. The communication channel may in some embodiments be over an interface between the RAN and the wireless device 1. This is the case when the wireless device 1 for instance is a smartphone, a loT device or a large intelligent surface device. In some embodiments the wireless device 1 is part of the RAN, and hence may be a relay device, or a large intelligent surface device. In this case the communication channel may be a communication channel in the backhaul of the RAN.

In some embodiments, the measurement report (comprising the measurement result), which in some embodiments is comprised in a control message, is transmitted on the Radio resource control (RRC) layer, the Media Access control (MAC) layer and/or the physical (PHY) layer. In some embodiments, the measurement report, i.e., the measurement result, is sent on the RRC layer. However, in other embodiments many consecutive sensing operations are performed, and MAC and Phy layer signaling may be preferred for transmitting the measurement report, due to faster measurement response time. This may be advantageous as latency may be reduced. In these embodiments measurement reports comprising differential information as described above may be used.

In some embodiments, the measurement report may be transmitted on an application layer. This may be the case when the remote server 3 controlling the sensing operations is located outside RAN and the core network and hence the remote server 3 is an application server on the Internet. This may be advantageous as by transmitting measurement reports on an application layer the sensing operation can be performed by an over-the-top operator, and hence can be independent of the RAN network used.

Figure 19 is a schematic drawing illustrating an example computer readable medium in the form of a compact disc (CD) ROM 1900. Alternatively, the computer readable medium is a universal serial bus, USB, flash drive or other flash memory. The computer readable medium has stored thereon a computer program comprising program instructions. The computer program is loadable into a data processing unit (PROC) 1920, which may be a processor/control unit 50 or another processing unit comprised in or otherwise associated with a wireless device 1. When loaded into the data processing unit, the computer program may be stored in a memory (MEM) 1930 associated with (connectable or connected to) or comprised in the data processing unit. The memory may be data storage unit. According to some embodiments, the computer program may, when loaded into and run by the data processing unit, cause execution of method steps according to, for example, any of the methods illustrated in Figures 9-16 or otherwise (e.g., in claim 9) described herein.

List of examples (3):
1. A control unit (50) for a wireless device (1), the wireless device (1) comprising a first and a second set of transceiver units (51a, 51b, 51c, 51d, 51e) being connectable to the control unit (50), the control unit (50) being configured to control the first set of transceiver units to perform communication, utilizing a communication channel, with a network, NW, node (2) and configured to control the second set of transceiver units to sense and/or localize a surrounding object, the control unit further being configured to: receive a sensing configuration from the NW node (2), the sensing configuration comprising a sensing measurement report configuration; cause the second set of transceiver units to perform a sensing operation for sensing and/or localizing the surrounding object in accordance with the received sensing configuration; obtain a measurement result based on the sensing operation; and transmit the measurement result to the NW node utilizing the sensing measurement report configuration.
2. The control unit of example 1, wherein the measurement result is transmitted to the NW node (2) in a control message.
3. The control unit of any of examples 1-2, wherein the sensing operation is a radar operation and the obtained measurement result is based on reception of a response signal, such as a radar signal reflection, or wherein the sensing operation is a backscatter operation and the obtained measurement result is based on a response signal received from a backscatter device.
4. The control unit of any of examples 1-3, wherein the measurement result comprises one or more of: a. A radio channel impulse response signal/message; b. A response signal time spread and amplitude variation measure; c. A spatial direction of the response signal, such as a spatial direction of the radar signal reflection, preferably a spatial radio channel impulse response; d. doppler, velocity or direction information associated with the surrounding object; e. An object identifier, the object identifier determined based on a received response signal, such as a radar signal reflection; f. Information related to a difference between a measurement from a previous radar operation and a corresponding measurement of the present radar operation.
5. The control unit of any of examples 3-4, wherein the measurement result comprises one or more of an identifier for the backscatter device and a sensor value received from the backscatter device.
6. The control unit of any of examples 3-5, wherein the control unit (50) is further configured to classify the object by comparing the received response signal with previously received response signals having assigned object identifiers to find a best match and wherein the object identifier corresponding to the best match is included in the measurement result.
7. The control unit of any of examples 2-6, wherein the control message is transmitted on one or more of a radio resource control, RRC, layer; a media access control, MAC, layer; a physical, Phy, layer; and an application layer.
8. A wireless device (1) comprising the control unit (50) of any of examples 1-7 and a first and a second set of transceiver units (51a, 51b, 51c, 51d, 51e) being connectable to the control unit (50).
9. A method (400) of a control unit (50) for a wireless device (1), the wireless device comprising a first and a second set of transceiver units (51a, 51b, 51c, 51d, 51e) being connectable to the control unit (50), the method comprising: controlling (410) the first set of transceiver units to perform communication, utilizing a communication channel, with a network, NW, node (2); receiving (420) a sensing configuration from the NW node (2), the sensing configuration comprising a sensing measurement report configuration; controlling (430) the second set of transceivers to perform a sensing operation for sensing and/or localizing a surrounding object in accordance with the received sensing configuration; obtaining (440) a measurement result based on the sensing operation; and transmitting (450) the measurement result to the NW node (2) utilizing the sensing measurement report configuration.
10. A computer program product comprising a non-transitory computer readable medium (1900), having thereon a computer program comprising program instructions, the computer program being loadable into a data processing unit (1920) and configured to cause execution of the method of example 9 when the computer program is run by the data processing unit.

Generally, all terms used herein are to be interpreted according to their ordinary meaning in the relevant technical field, unless a different meaning is clearly given and/or is implied from the context in which it is used. Reference has been made herein to various embodiments. However, a person skilled in the art would recognize numerous variations to the described embodiments that would still fall within the scope of the claims. For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step. In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer e.g., a single) unit. Any feature of any of the embodiments/aspects disclosed herein may be applied to any other embodiment/aspect, wherever suitable. Likewise, any advantage of any of the embodiments may apply to any other embodiments, and vice versa. Hence, it should be understood that the details of the described embodiments are merely examples brought forward for illustrative purposes, and that all variations that fall within the scope of the claims are intended to be embraced therein.

## Claims

1. A control unit (50) for a wireless device (1), the wireless device comprising a communication transceiver unit (51a) and a sensing/localization transceiver unit (51b), the control unit (50) being configured to:
control the communication transceiver unit (51a) to communicate with a network, NW, node (2);
control the sensing/localization transceiver unit (51b) to sense and/or localize an object; and
control the communication transceiver unit (51a) to transmit capability information to the NW node (2),
wherein the capability information comprises one or more sensing and localization capability indices according to a pre-defined rule, the one or more sensing and localization capability indices indicating sensing and/or localization capabilities of the wireless device (1).

2. The control unit (50) of claim 1, wherein the pre-defined rule is according to a communication standard or a sensing and/or localization standard.

3. The control unit (50) of claim 1 or 2, wherein at least one of the sensing and localization capability indices indicates a frequency range which can be utilized for sensing and/or localization of the object.

4. The control unit (50) of any one of claims 1-3, wherein at least one of the sensing and localization capability indices indicates whether the sensing/localization transceiver unit (51b) has backscattering capability and/or radar capability.

5. The control unit (50) of any one of claims 1-4, wherein at least one of the sensing and localization capability indices indicates whether simultaneous sensing and communication is possible.

6. The control unit (50) of any one of claims 1-5, wherein at least one of the sensing and localization capability indices indicates one or more of:
spatial resolution of sensing and localization capabilities;
one or more sensing and localization operation power limits;
time duration and periodicity of sensing and/or localization operation capabilities; and
sensing and localization measurement reporting capabilities.

7. The control unit (50) of any one of claims 1-6, wherein the control unit (50) is further configured to:
associate the wireless device (1) with the NW node (2) for establishing a wireless communication channel, preferably through a connection setup; and/or establish a connection to a remote server (3), connected to the NW node (2), the remote server (3) controlling the sensing and/or localization of the object.

8. The control unit (50) of any one of claims 1-7, wherein controlling the communication transceiver unit (51a) to transmit capability information comprises causing all of the capability information to be transmitted on a radio resource control, RRC, layer.

9. The control unit (50) of claim 8 , wherein the capability information is transmitted in longer messages utilizing non-prioritized time-frequency resources.

10. The control unit (50) of any one of claims 1-9, wherein the communication transceiver unit (51a) is utilized as the sensing/localization transceiver unit (51b).

11. The control unit (50) of any one of claims 1-10, wherein communication with the NW node (2) is performed in a first frequency range and the sensing and/or localization of the object is performed in a second frequency range, the second frequency range at least partially overlapping the first frequency range.

12. A wireless device (1) comprising:
a communication transceiver unit (51a);
a sensing/localization transceiver unit (51b); and
the control unit (50) of any one of claims 1-11.

13. A method (100) of a control unit (50) for a wireless device (1), the wireless device comprising a communication transceiver unit (51a) and a sensing/localization transceiver unit (51b), the method comprising:
controlling (120) the communication transceiver unit (51a) to communicate with a network, NW, node (2);
controlling (140) the sensing/localization transceiver unit (51b) to sense and/or localize an object; and
controlling (150) the communication transceiver unit (51a) to transmit capability information to the NW node (2),
wherein the capability information comprises one or more sensing and localization capability indices according to a pre-defined rule, the one or more sensing and localization capability indices indicating sensing and/or localization capabilities of the wireless device (1).

14. A computer program product comprising a non-transitory computer-readable medium (1900), having stored thereon a computer program comprising program instructions, the computer program being loadable into a data processing unit (1920) and configured to cause execution of the method of claim 13 when the computer program is run by the data processing unit.
